# EUROPÄISCHE PATENTANMELDUNG

(11) **EP 3 486 520 A1**
(43) Veröffentlichungstag der Anmeldung: **22.05.2019**
(21) Anmeldenummer: 18202875.3
(22) Anmeldetag: 26.10.2018
(51) Int. Cl.: F16F 9/04

(54) **LUFTFEDERANLAGE FÜR EIN KRAFTFAHRZEUG**

(30) Priorität: 21.11.2017 DE 102017127448; 23.08.2018 DE 102018120646
(71) Anmelder: Gudzulic, Miro, 82346 Andechs (DE)
(72) Erfinder: Gudzulic, Miro, 82346 Andechs (DE)
(74) Vertreter: Hofstetter, Schurack & Partner

(57) **Zusammenfassung**

Die Erfindung betrifft eine Luftfederanlage für ein Kraftfahrzeug, mit wenigstens einem Bauelement (11), welches an einem Anschlussbauteil (14) mittels eines Verbindungselements (10) unter Ausbildung einer Steckverbindung fixiert ist, wobei die Steckverbindung eine lösbare Rastverbindung (13) ist.

## Beschreibung

Die Erfindung betrifft eine Luftfederanlage für ein Kraftfahrzeug gemäß dem Oberbegriff des Patentanspruchs 1.

Aus der DE 10 2006 005 471 A1 ist eine dezentrale Niveaufederungsanlage für Kraft- und Schienenfahrzeuge bekannt. Diese Niveaufederungsanlage umfasst eine Luftfeder mit einer Ventilsensoreinheit, Elektronik, ein Hauptventil, einen Druckluftspeicher, Druckluftleitungen, Elektroleitungen und Schalldämpfer. Die Ventilsensoreinheit ist lösbar über eine Hohlschraube mit der Luftfeder verbunden.

Verbindungselemente werden beispielsweise dazu genutzt, um eine Leitung, insbesondere eine Medien führende Leitung, an einem Anschlussbauteil anzuschließen. Beispielsweise werden derartige Verbindungselemente genutzt, um Pneumatik- oder Hydraulikleitungen an Anschlussbauteilen in Form von Deckelelementen von Luft- oder Hydraulik-Feder- und/oder Dämpferelementen zu befestigen. Hierbei werden bislang beispielsweise Schraubflansche genutzt, welche in eine korrespondierende Gewindeöffnung des Anschlussbauteils beziehungsweise Deckels des Luft- oder Hydraulik-Feder- und/oder Dämpferelements geschraubt werden. Der Schraubflansch ist dabei andernends mit dem Ende der zugehörigen Leitung verbunden.

Da derartige Aufbauten relativ aufwendig und montageintensiv sind, ist es aus der DE 60 2005 004 510 T2 bereits bekannt, ein Verbindungselement zum Einsetzen in einer Öffnung eines Anschlussbauteils vorzusehen, welches ein in einer Aufnahmenut angeordnetes und durch die Federkraft eines Dichtrings beaufschlagtes Fixierelement in Form eines Krallenelements umfasst, mittels welchem das Verbindungselement innerhalb der Öffnung des Anschlussbauteils fixiert ist. Hierzu verhaken sich jeweilige Greifränder des Krallenelements an der zugehörigen Innenumfangswand beziehungsweise Begrenzungswand der Öffnung des Anschlussbauteils. Insbesondere aufgrund der Ausgestaltung der Nut mit einem nach innen des Anschlussbauteils zunehmenden Durchmesser ergibt sich jedoch die Problematik, dass das dortige Verbindungselement - beispielsweise im Schadensfall - äußerst schlecht demontiert werden kann. Zudem ist das Verbindungselement insgesamt relativ aufwändig gestaltet.

Aufgabe der vorliegenden Erfindung ist es daher, eine Luftfederanlage für ein Kraftfahrzeug der eingangs genannten Art zu schaffen, mittels welcher sich eine verbesserte Demontage eines Bauelements von einem Anschlussbauteil realisieren lässt und mittels welcher sich insgesamt ein einfacherer und kostengünstiger Aufbau der Luftfederanlage realisieren lässt.

Diese Aufgabe wird erfindungsgemäß durch eine Luftfederanlage mit den Merkmalen des Patentanspruchs 1 gelöst. Vorteilhafte Ausgestaltungen mit zweckmäßigen Weiterbildungen der Erfindung sind in den jeweils abhängigen Ansprüchen sowie in der folgenden Beschreibung angegeben.

Die Erfindung betrifft eine Luftfederanlage für ein Kraftfahrzeug mit wenigstens einem Bauelement, welches an einem Anschlussbauteil mittels eines Verbindungselements unter Ausbildung einer Steckverbindung fixiert ist. Mit anderen Worten ist das Bauelement über die Steckverbindung mit dem Anschlussbauteil verbunden, wobei das Verbindungselement in eine Öffnung des Bauelements und/oder in eine Öffnung des Anschlussbauteils zum Ausbilden der Steckverbindung eingesteckt ist. Bei dem Anschlussbauteil kann es sich insbesondere um eine Luftfeder oder um ein Rahmenteil beziehungsweise Rohbauteil des Kraftfahrzeugs oder um einen Halter an einem Rohbauteil oder um einen Luftaufbereiter der Luftfederanlage handeln. Die Luftfederanlage dient insbesondere einer Fahrzeugfederung des Kraftfahrzeugs, bei welchem es sich insbesondere um einen Kraftwagen handelt. Insbesondere handelt es sich bei dem Kraftfahrzeug um einen Lastkraftwagen oder um einen Omnibus. Um eine besonders vorteilhafte Demontage des Bauelements von dem Anschlussbauteil zu ermöglichen ist es erfindungsgemäß vorgesehen, dass die Steckverbindung eine lösbare Rastverbindung ist. Das bedeutet, dass beim Montieren das Bauelement an das Anschlussbauteil angelegt wird und mit diesem über das Verbindungselement verbunden wird, wobei das Verbindungselement mit beziehungsweise in der Öffnung des Bauelements und/oder der Öffnung des Anschlussbauteils verrastet. Diese Rastverbindung ist zum Demontieren des Bauelements von dem Anschlussbauteil lösbar. Bei dem Verbindungselement handelt es sich somit um ein Rastelement, welches in wenigstens eine der Öffnungen eingerastet wird beziehungsweise mit wenigstens einer der Öffnungen durch Hintergreifen der jeweiligen Öffnung verrastet. Unter der lösbaren Rastverbindung ist zu verstehen, dass zum Trennen des Bauelements von dem Anschlussbauteil das Verbindungselement von den Öffnungen durch Entrasten getrennt werden kann. Das Verbinden des Bauelements an dem Anschlussbauteil über die Rastverbindung ermöglicht somit, dass das Bauelement besonders schnell und einfach an dem Anschlussbauteil befestigt werden kann. Darüber hinaus ermöglicht die lösbare Rastverbindung, dass das Bauelement besonders einfach vom Anschlussbauteil getrennt werden kann um das Bauelement vom Anschlussbauteil zu demontieren. Die lösbare Rastverbindung ermöglicht ein besonders einfaches und schnelles Montieren des Bauelements an dem Anschlussbauteil und ermöglicht darüber hinaus ein besonders einfaches Demontieren des Bauelements von dem Anschlussbauteil. Die lösbare Rastverbindung ermöglicht somit, dass das über die lösbare Rastverbindung mit dem Anschlussbauteil verbundene Bauelement besonders einfach ausgetauscht werden kann.

In einer Weiterbildung der Erfindung hat es sich als vorteilhaft gezeigt, wenn das Verbindungselement einteilig mit dem Bauelement ausgebildet ist. Das bedeutet, dass das Verbindungselement einstückig mit dem Bauelement ausgebildet ist, und somit Teil des Bauelements ist. Hierbei kann das Verbindungselement Teil eines Gehäuses des Bauelements sein und hierfür beim Herstellen des Gehäuses des Bauelements angeformt werden. Hierbei kann das Verbindungselement bei einem Gießen des Gehäuses des Bauelements angeformt werden. Alternativ oder zusätzlich kann das Verbindungselement durch Anspritzen und/oder Anschweißen und/oder Ankleben an das Bauelement angeformt werden. Bei dem an das Bauelement angeformten Verbindungselement handelte es sich insbesondere um das Rastelement, welches beispielsweise als Stopfenelement ausgebildet ist. Ist das Verbindungselement einteilig mit dem Bauelement ausgebildet, so wird das Verbindungselement zum Herstellen der Rastverbindung in die Öffnung des Anschlussbauteils eingesteckt und mit dieser Öffnung beziehungsweise in dieser Öffnung verrastet. Zum Verbinden des Bauelements mit dem Anschlussbauteil ist somit lediglich das einteilig mit dem Bauelement ausgebildete Verbindungselement relativ zur Öffnung des Anschlussbauteils zu positionieren und in die Öffnung des Anschlussbauteils einzustecken. Hierdurch ist das Bauelement besonders einfach an dem Anschlussbauteil fixierbar.

In einer alternativen vorteilhaften Ausgestaltung der Erfindung ist vorgesehen, dass das Verbindungselement separat von dem Bauelement ausgebildet ist. Hierbei kann das Verbindungselement sowohl separat von dem Bauelement als auch separat von dem Anschlussbauteil ausgebildet sein. Alternativ ist das Verbindungselement separat von dem Bauelement und einstückig beziehungsweise einteilig mit dem Anschlussbauteil ausgebildet. Ist das Verbindungselement einteilig mit dem Anschlussbauteil ausgebildet, dann wird das Verbindungselement zum Herstellen der Rastverbindung in die Öffnung des Bauelements eingesteckt und mit dieser Öffnung beziehungsweise in dieser Öffnung verrastet. Das Verbindungselement ist beispielsweise an das Anschlussbauteil angespritzt und/oder angeschweißt und/oder angeklebt. Beispielsweise kann das Verbindungselement mit einem Gehäuse des Anschlussbauteils, insbesondere der Luftfeder, stoffschlüssig verbunden sein. Ist das Verbindungselement sowohl separat von dem Bauelement als auch separat von dem Anschlussbauteil ausgebildet, so wird das Verbindungselement sowohl in die Öffnung des Bauelements als auch in die Öffnung des Anschlussbauteils zumindest eingesteckt, insbesondere durch wenigstens eine der Öffnungen hindurch gesteckt. In einer der Öffnungen beziehungsweise mit einer der Öffnungen verrastet das Verbindungselement zum Ausbilden der Rastverbindung. Zudem ist eine axiale Festlegung vorgesehen, mittels welcher das Verbindungselement entlang seiner Mittelachse relativ zu dem Bauelement und relativ zu dem Anschlussbauteil bei Ausbildung der Rastverbindung festlegbar ist. Das bedeutet, dass das Verbindungselement mit dem Bauelement verrastet und über das Anschlussbauteil axial festgelegt wird oder das Verbindungselement mit dem Anschlussbauteil verrastet und über das Bauelement axial festgelegt wird. Unter dem axialen Festlegen ist zu verstehen, dass eine Bewegung des Verbindungselements relativ zu dem Bauelement und/oder dem Anschlussbauteil entlang einer Mittelachse zumindest einer der Öffnungen unterbunden wird. Das Verbindungselement kann beispielsweise ein Gewinde aufweisen, über welches das Verbindungselement durch Einschrauben in das Bauelement oder in das Anschlussbauteil axial festlegbar ist. Alternativ oder zusätzlich kann das Verbindungselement einen seitlichen Kragen aufweisen, welcher radial vom Verbindungselement abkragt und welcher zur axialen Festlegung bei Ausbildung der Rastverbindung gegen das Bauelement oder gegen das Anschlussbauteil abgestützt ist. Hierbei kann der Kragen des Verbindungselements eine der jeweiligen Öffnungen des Bauelements oder des Anschlussbauteils hintergreifen, wobei das Verbindungselement mit der jeweiligen anderen Öffnung verrastet. Das Verbindungselement ist somit in jeder der Ausgestaltungen relativ zur Rastverbindung axial festlegbar. Entweder ist das Verbindungselement axial festgelegt, indem dieses einstückig mit dem Bauelement oder dem Anschlussbauteil ausgebildet ist, oder das Verbindungselement weist die axiale Festlegung auf, über welche das Verbindungselement relativ zu dem Bauelement und/oder dem Anschlussbauteil axial festlegbar ist. Dies ermöglicht eine besonders genaue positionsfeste Fixierung des Bauelements an dem Anschlussbauteil.

Es hat sich in weiterer Ausgestaltung der Erfindung als vorteilhaft gezeigt, wenn das Bauelement als Leitung, insbesondere für ein Fluid wie beispielsweise Luft, oder als Ventileinheit und/oder Sensoreinheit ausgebildet ist. Das bedeutet, dass es sich bei dem Bauelement um die Leitung zum Führen des Fluids oder um die Ventil- und/oder Sensoreinheit handelt. Bei der Leitung kann es sich um eine Pneumatikleitung zum Führen von Druckluft handeln, wobei über die Pneumatikleitung Druckluft für die Luftfeder bereitstellbar ist und/oder Druckluft aus der Luftfeder entnehmbar ist. Die Ventileinheit oder die Ventil- und Sensoreinheit kann ein Schaltventil umfassen, welches beispielsweise pneumatisch und/oder hydraulisch und/oder elektromagnetisch und/oder elektrisch schaltbar ist. Die Ventil- und Sensoreinheit beziehungsweise die Sensoreinheit kann einen Abstandssensor aufweisen, mittels welchem ein Betriebszustand der Luftfeder über einen Abstand zwischen der Ventil- und Sensoreinheit beziehungsweise der Sensoreinheit und einem der Ventil- und Sensoreinheit beziehungsweise der Sensoreinheit abgewandten Boden der Luftfeder ermittelbar ist. Der Betriebszustand der Luftfeder beschreibt, in wie weit die Luftfeder aufgeblasen ist. Über die Rastverbindung ist somit die Leitung oder die Ventil- und/oder Sensoreinheit besonders einfach und schnell an dem Anschlussbauteil beziehungsweise der Luftfeder befestigbar.

In einer weiteren Ausgestaltung der Erfindung ist vorgesehen, dass die Rastverbindung zerstörungsfrei lösbar ist. Das bedeutet, dass beim Lösen der Rastverbindung weder das Bauelement noch das Anschlussbauteil noch das Verbindungselement zerstört wird. Hierbei ist beispielsweise zum Befestigen des Bauelements an dem Anschlussbauteil das Verbindungselement durch eine der Öffnungen hindurch steckbar, wobei das Verbindungselement ein Fixierungselement aufweist, welches die Öffnung durch welche das Verbindungselement hindurchgesteckt ist, hintergreift und welches für ein Werkzeug von außen zugänglich ist. Bei dem Fixierungselement kann es sich beispielsweise um einen Sicherungsring oder um eine Rastnase handeln. Beispielsweise wird die Rastverbindung über den Sicherungsring des Verbindungselements ausgebildet, indem der Sicherungsring eine der Öffnungen hintergreift. Hierbei hintergreift der Sicherungsring die Öffnung nach außen hin, sodass der Sicherungsring an einer einer Kontaktfläche des Bauelements mit dem Anschlussbauteil abgewandten Seite der Öffnung die Öffnung hintergreift. Somit ist der Sicherungsring außen an der Öffnung anliegend, sodass der Sicherungsring für ein Werkzeug zum Entfernen des Sicherungsrings von außen und somit besonders vorteilhaft zugänglich ist. Durch das Entfernen des Sicherungsrings ist die Rastverbindung lösbar und das Verbindungselement von dem Bauelement und/oder dem Anschlussbauteil zu lösen. Handelt es sich bei dem Fixierungselement um die Rastnase, so ist bei Ausbildung der Rastverbindung die Rastnase derart angeordnet, dass diese für ein von außen angreifendes Werkzeug zugänglich ist, wobei mittels des Werkzeugs die Verrastung der Rastnase zum Lösen der Rastverbindung entrastet wird. Die zerstörungsfreie Lösbarkeit der Rastverbindung ist vorteilhafterweise besonders nachhaltig, da sowohl das Bauelement als auch das Anschlussbauteil als auch das Verbindungselement mehrfach verwendet werden können.

Um eine Luftfederanlage mit dem Verbindungselement, welches zum Befestigen in einer Öffnung des Anschlussbauteils ausgebildet ist, und ein Stopfenelement aufweist, welches in die Öffnung einsteckbar ist und welches eine Aufnahmenut aufweist, in welcher ein Fixierungselement zur Fixierung des Stopfenelements in der Öffnung angeordnet ist, zu schaffen, welche insgesamt einen einfachen Aufbau aufweist und auf verbesserte Weise von dem Anschlussbauteil demontierbar ist, ist es vorgesehen, dass das Stopfenelement im Bereich der Aufnahmenut für das Fixierelement eine Trennstelle aufweist, an welcher ein zweiter Teil des Stopfenelements von dem ersten Teil trennbar ist. Eine derartige Trennstelle kann beispielsweise und insbesondere als Sollbruchstelle ausgebildet sein, bei welcher beispielsweise durch einen oder mehrere Stege eine gezielte Schwächung innerhalb des Stopfenelements vorgesehen ist, sodass beispielsweise bei einer Demontage das Stopfenelement in diesem Bereich in den ersten und den zweiten Teil getrennt werden kann. Alternativ hierzu wäre es beispielsweise auch denkbar, bereits getrennte Teile des Stopfenelements vorzugsehen und beispielsweise über eine geeignete Fügverbindung, beispielsweise eine Klebeverbindung, oder aber über einen mechanische Verbindung, beispielsweise eine Gewindeverbindung, miteinander zu verbinden, wobei die Teile des Stopfenelements an dieser Trennstelle dann beispielsweise zur Demontage entsprechend voneinander unterteilt werden können. Die zwischen dem Bauelement und dem Anschlussbauteil über das Verbindungselement, insbesondere das Stopfenelement des Verbindungselements, ausgebildete Rastverbindung ist hierbei lediglich unter Zerstörung des Verbindungselements, insbesondere unter Trennung des Stopfenelements, lösbar. Beispielsweise werden die beiden Teile des Stopfenelements durch Torsion und somit durch Drehen der Teile um eine gemeinsame Drehachse in einander entgegengesetzten Richtungen voneinander getrennt. Die Drehachse deckt sich hierbei insbesondere mit einer Mittelachse des Stopfenelements.

Die Trennstelle ist dabei vorzugsweise und insbesondere im Bereich der Aufnahmenut für das Fixierelement vorgesehen, sodass beispielsweise bei der Demontage zunächst das erste Teil des Stopfenelements von dem zweiten Teil des Stopfenelements getrennt werden kann, wonach das Fixierelement vorzugsweise derart frei zugänglich ist, dass dieses in einfacher Weise demontiert beziehungsweise aus der Öffnung des Anschlussbauteils entnommen werden kann. Im Anschluss daran kann dann der innenseitig des Fixierelements positionierte zweite Teil des Stopfenelements entnommen und beispielsweise ein neues Verbindungselement eingesetzt werden. Hierbei ist dann das Fixierelement gegebenenfalls auch bei einem neuen Stopfenelement wiederverwendbar.

Da das Fixierelement im Bereich der Aufnahmenut und somit vorzugsweise zwischen den beiden Teilen des Stopfenelements angeordnet ist, kann dieses relativ einfach gestaltet werden und auf einfache Weise an beziehungsweise in der Aufnahmenut positioniert werden, wobei sich eine einfache und definierter Positionierung des Fixierelements ergibt, welche einen einfachen Aufbau des Verbindungselements gewährleistet. Hierdurch ergibt sich auch eine relativ kostengünstige Montage des Verbindungselements insgesamt.

In weiterer Ausgestaltung der Erfindung hat es sich als vorteilhaft gezeigt, wenn die Trennstelle als Sollbruchstelle zwischen den beiden Teilen des Stopfenelements ausgebildet ist. Eine derartige Trennstelle ist besonders einfach darstellbar, insbesondere, wenn das Stopfenelement aus einem Kunststoff hergestellt ist.

In weiterer vorteilhafter Ausgestaltung der Erfindung ist vorgesehen, dass ein zweites der Teile des Stopfenelements eine Festlegung aufweist, mittels welcher das zweite Teil relativ zum Bauelement und/oder dem Anschlussbauteil kraftschlüssig und/oder formschlüssig radial festlegbar ist. Unter der radialen Festlegung ist zu verstehen, dass eine Rotation des zweiten Teils des Stopfenelements um dessen Mittelachse relativ zu dem Bauteil und/oder dem Anschlussbauteil unterbunden wird. Des Weiteren ist vorgesehen, dass das erste Teil einen Werkzeugangriff aufweist, an welchem ein Werkzeug zum Trennen der beiden Teile des Stopfenelements ansetzbar ist. Das bedeutet, dass das zweite der Teile über die Festlegung radial relativ zum Anschlussbauteil und/oder dem Bauelement festgelegt ist. Um die Rastverbindung zu lösen, wird an dem Werkzeugangriff das Werkzeug angelegt und mittels des Werkzeugs der zweite Teil relativ zum ersten Teil um die Drehachse verdreht um das erste Teil vom zweiten Teil zu trennen. Die Festlegung des zweiten Teils ermöglicht, dass lediglich mittels eines einzigen Werkzeugs das erste Teil vom zweiten Teil getrennt werden kann. Somit ist das erste Teil vom ersten Teil besonders einfach trennbar, da lediglich das eine Werkzeug zum Verdrehen der beiden Teile relativ zueinander benötigt wird.

In diesem Zusammenhang hat es sich als besonders vorteilhaft erwiesen, wenn die Festlegung einen Klebestoff umfasst, mittels welchem der die Festlegung aufweisende zweite Teil mit dem Bauelement und/oder mit dem Anschlussbauteil verklebt ist. Beispielsweise ist das Verbindungselement separat vom Bauelement und separat vom Anschlussbauteil ausgebildet und zumindest durch eine der korrespondierenden Öffnungen des Bauelements und des Anschlussbauteils hindurch gesteckt und in die andere der Öffnungen zumindest eingesteckt. In der Öffnung, in welche das Verbindungselement eingesteckt ist, ist das Verbindungselement mit einer die Öffnung begrenzenden Wandung verrastet. Der erste Teil des Stopfenelements des Verbindungselements ist für das von außerhalb der Öffnungen an das Verbindungselement anlegbare Werkzeug zugänglich, wobei der zweite Teil des Verbindungselements die radiale Festlegung aufweist. Zum Festlegen des zweiten Teils des Stopfenelements mittels Klebstoff ist der Klebstoff beispielsweise auf den zweiten Teil des Stopfenelements aufgebracht und anschließend die Rastverbindung herstellbar. Mittels des Klebstoffs ist die Festlegung des zweiten Teils besonders einfach und kostengünstig umsetzbar.

In einer alternativen Ausgestaltung der Erfindung ist es vorgesehen, dass das zweite Teil als die radiale Festlegung eine umfangsseitige Außenkontur aufweist, welche mit einer umfangsseitigen Innenkontur einer Ausnehmung des Anschlussbauteils korrespondiert. Beispielsweise greift die Außenkontur des zweiten Teils in die Innenkontur des Anschlussbauteils beim Ausbilden der Rastverbindung ein. Die korrespondierenden Konturen ermöglichen eine formschlüssige Festlegung des zweiten Teils relativ zum Anschlussbauteil und/oder zum Bauelement. Bei der korrespondierenden Kontur kann es sich insbesondere um einen wenigstens eine Ecke aufweisenden Umfang handeln. Über den Formschluss ist das zweite Teil besonders sicher festlegbar um ein Lösen der Festlegung beim Verdrehen des ersten Teils relativ zum zweiten Teil zu vermeiden. Die formschlüssige Festlegung stellt sicher, dass sich das zweite Teil beim Drehen des ersten Teils mittels des Werkzeugs um die Drehachse nicht mit dem ersten Teil mit dreht sondern relativ zum Anschlussbauteil und/oder dem Bauelement fixiert ist.

In einer alternativen oder zusätzlichen Ausgestaltung der Festlegung kann das zweite Teil als radiale Festlegung in die Öffnung des Bauelements und/oder des Anschlussbauteils eingepresst sein. Somit ist die Festlegung als Einpressung ausgebildet, mittels welcher das zweite Teil relativ zum Anschlussbauteil und/oder dem Bauelement zu fixieren ist.

Eine weitere vorteilhafte Ausführungsform der Erfindung sieht vor, dass an beiden Teilen des Stopfenelements ein jeweiliger Werkzeugangriff vorgesehen ist, an welchen jeweilige Werkzeuge zum Trennen der beiden Teile des Stopfenelements ansetzbar sind. Beispielsweise durch gegenläufiges Verdrehen der beiden Teile des Stopfenelements mittels jeweiliger Werkzeuge, welche an den entsprechenden Werkzeugangriffen der beiden Teile des Stopfenelements angesetzt sind, kann somit in einfacher Weise das Stopfenelement unterteilt und anschließend aus der Öffnung entnommen werden.

In weiterer Ausgestaltung der Erfindung weist das Stopfenelement einen aus der Öffnung heraus stehenden Kopf auf, an welchem der Werkzeugangriff des ersten Teils des Stopfenelements vorgesehen ist. Der Kopf kann dabei vorzugsweise eine Doppelfunktion aufweisen, nämlich einerseits die Einstecktiefe des Stopfenelements bestimmen und andererseits als Werkzeugangriff für den ersten Teil des Stopfenelements dienen.

Eine weitere, vorteilhafte Ausführungsform der Erfindung sieht vor, dass das Stopfenelement eine Durchgangsöffnung aufweist, an welcher der Werkzeugangriff des zweiten Teils des Stopfenelements vorgesehen ist. Die Durchgangsöffnung kann dabei insbesondere zur Aufnahme einer Leitung beziehungsweise zur weiteren Führung eines Mediums vorgesehen sein, sodass die Funktion der Durchgangsöffnung in einfacher Weise durch einen Werkzeugangriff erweitert werden kann.

In vorteilhafter Ausgestaltung der Erfindung ist es zudem vorgesehen, dass das Fixierelement als Krallenelement ausgebildet ist mit einem ebenen Bereich, insbesondere eine Scheibe, sowie einen schräg dazu verlaufenden Kragenbereich aufweist mit einem freien Ende zum Angriff des Krallenelements an einer Begrenzungswand der Öffnung. Diese beispielsweise etwa napfartige Gestaltung des Krallenelements hat einerseits den Vorteil einer günstigen Abstützung durch den ebenen Bereich und andererseits den Vorteil einer günstigen Fixierung beziehungsweise Verhakung des Krallenelements mit seinem freien Ende an einer korrespondierenden Begrenzungswand der Öffnung.

Eine weitere vorteilhafte Ausführungsform der Erfindung sieht vor, dass die Aufnahmenut eine ebene Aufnahme für den ebenen Bereich des Krallenelements aufweist, welche durch einen Steg von der Durchgangsöffnung des Stopfenelements getrennt ist. Die ebene Aufnahme ermöglicht dabei eine besonders günstige und positionsgetreue Anordnung des Krallenelements. Der Steg zwischen der ebenen Aufnahme und der Durchgangsöffnung des Stopfenelements bildet vorzugsweise die Sollbruchstelle zwischen dem ersten und dem zweiten Teil des Stopfenelements, sodass nach dem Unterteilen der beiden Teile des Stopfenelements das Krallenelement auf einfache Weise aus der Öffnung des Anschlussbauteils entnommen werden kann.

In weiterer Ausgestaltung der Erfindung weist die Aufnahmenut oberhalb der ebenen Aufnahme einen Aufnahmebereich für den schräg verlaufenden Kragenbereich des Krallenelements auf, welcher außerdem durch ein innerhalb des Aufnahmebereichs angeordnetes elastisches Stützelement nach außen hin abgestützt ist. Durch dieses elastische Stützelement ergibt sich eine besonders vorteilhafte Verhakung beziehungsweise Verbindung des Krallenelements mit der korrespondierenden Begrenzungswand der Öffnung. Außerdem ergibt sich eine positionsgetreue und definierte Anordnung des Krallenelements innerhalb der Aufnahmenut und somit in seiner Lage relativ zum Stopfenelement und zum Anschlussbauteil.

Die vorstehend im Zusammenhang mit dem erfindungsgemäßen Verbindungselement genannten Vorteile gelten in ebensolcher Weise für ein Anschlussbauteil mit einer Öffnung zum Befestigen eines erfindungsgemäßen Verbindungselements sowie für eine Befestigungsanordnung eines erfindungsgemäßen Verbindungselements in einer Öffnung eines Anschlussbauteils.

Das Anschlussbauteil zeichnet sich dabei insbesondere und vorteilhafter Weise außerdem dadurch aus, dass in die Begrenzungswand der Öffnung wenigstens eine Aufnahmevertiefung, insbesondere eine umlaufende Nut, eingebracht ist, an welcher sich das Fixierelement entsprechend verhaken und unter Ausbildung eines Hintergriffs abstützen kann.

Weitere Einzelheiten der Erfindung ergeben sich aus der nachfolgenden Beschreibung eines bevorzugten Ausführungsbeispiels sowie anhand der Zeichnungen. Dabei zeigen:

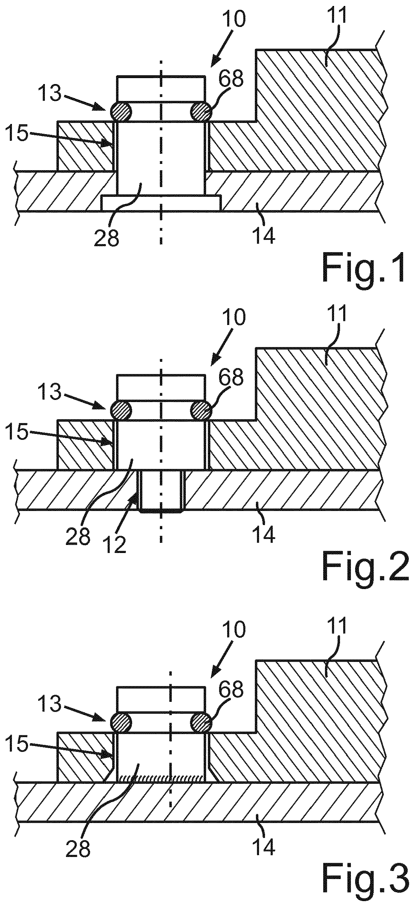

- Fig. 1: eine ausschnittweise Schnittansicht einer Befestigungsanordnung einer Luftfederanlage für ein Kraftfahrzeug, bei welcher ein Bauelement an einem Anschlussbauteil mittels eines Verbindungselements unter Ausbildung einer zerstörungsfrei lösbaren Rastverbindung verbunden ist, wobei das Verbindungselement an das Anschlussbauteil angespritzt ist und ein Stopfenelement aufweist, welches durch eine Öffnung des Bauelements hindurch gesteckt ist und mittels eines Fixierungselements die Öffnung des Bauelements zum Herstellen der Rastverbindung hingreift;
- Fig. 2: eine schematische Schnittansicht der Befestigungsanordnung mit dem Verbindungselement welches in eine Öffnung des Anschlussbauteils über ein Gewinde eingeschraubt ist und durch die Öffnung des Bauelements hindurchgesteckt ist und mit dem Fixierungselement die Öffnung des Bauelements zum Ausbilden der Rastverbindung hintergreift;
- Fig. 3: eine schematische Schnittansicht der Befestigungsanordnung mit dem Verbindungselement, welches an das Anschlussbauteil angeschweißt ist und durch die Öffnung des Bauelements hindurch gesteckt ist, wobei das Fixierungselement die Öffnung des Bauelements zum Ausbilden der Rastverbindung außenseitig hintergreift und zum Lösen der Rastverbindung für ein außenseitig anlegbares Werkzeug zugänglich ist;

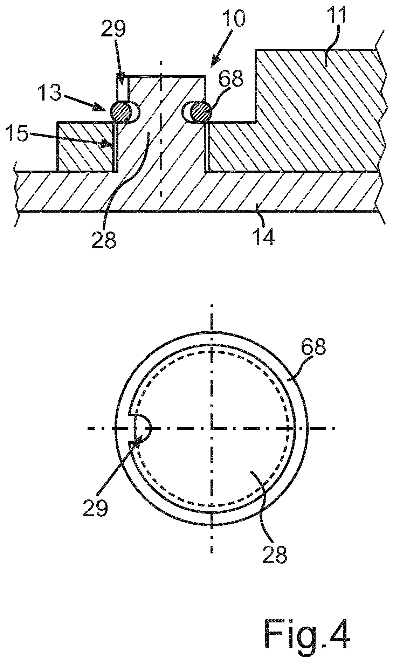

- Fig. 4: einen schematischen Teilschnitt der Befestigungsanordnung der lösbaren Rastverbindung, wobei das Stopfenelement einteilig mit dem Anschlussbauteil ausgebildet ist, die Öffnung des Bauelements durchdringt und der umfangsseitig geschlossene Sicherungsring die Öffnung des Bauelements an dessen dem Anschlussbauteil abgewandter Außenseite hintergreift, sowie eine Draufsicht auf das Verbindungselement;

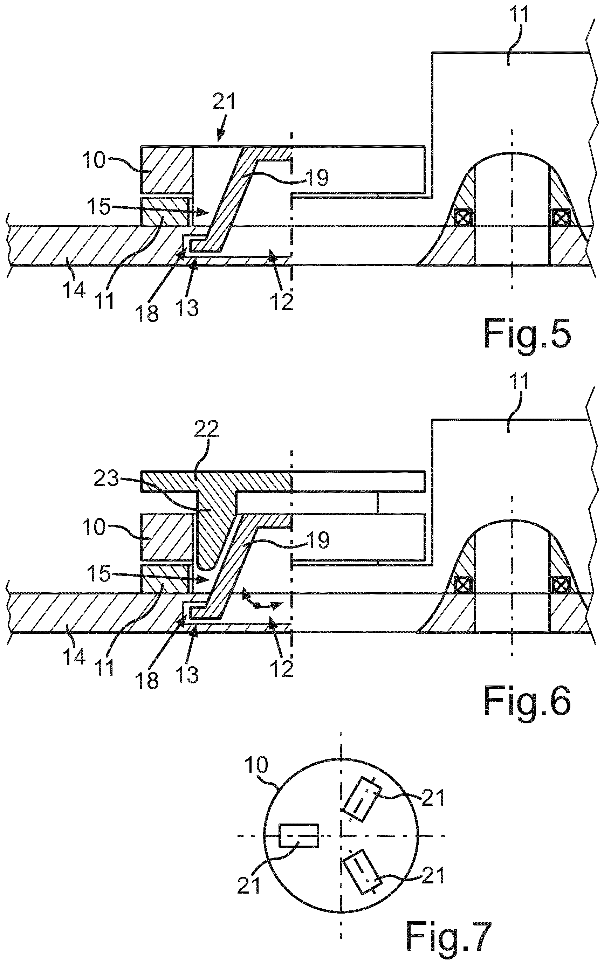

- Fig. 5: einen schematischen Teilschnitt der Befestigungsanordnung mit dem Verbindungselement, welches ein Rastelement aufweist, welches durch die Öffnung des Bauelements hindurch ragt und in eine Rastaufnahme in einer Öffnung des Anschlussbauteils zum Ausbilden der Rastverbindung eingreift;
- Fig. 6: einen schematischen Teilschnitt der Befestigungsanordnung gemäß Fig. 5 wobei an dem Verbindungselement anliegend ein Werkzeug dargestellt ist, mittels welchem das Rastelement über eine schiefe Ebene des Werkzeugs verschwenkbar ist um aus der Rastaufnahme zum Lösen der Rastverbindung herausbewegt zu werden, wobei die Eingreiföffnung des Verbindungselements zum Eingreifen des Werkzeugs seitlich durch das Rastelement begrenzt wird;
- Fig. 7: eine schematische Draufsicht auf das Verbindungselement mit drei jeweils in einem Winkel von 120 Grad relativ zueinander angeordneten Öffnungen des Verbindungselements in welche das Werkzeug zum Lösen der Rastverbindung eingreifen kann, wobei jeder der Öffnungen ein eine jeweilige Rastverbindung ausbildendes Rastelement zugeordnet ist;

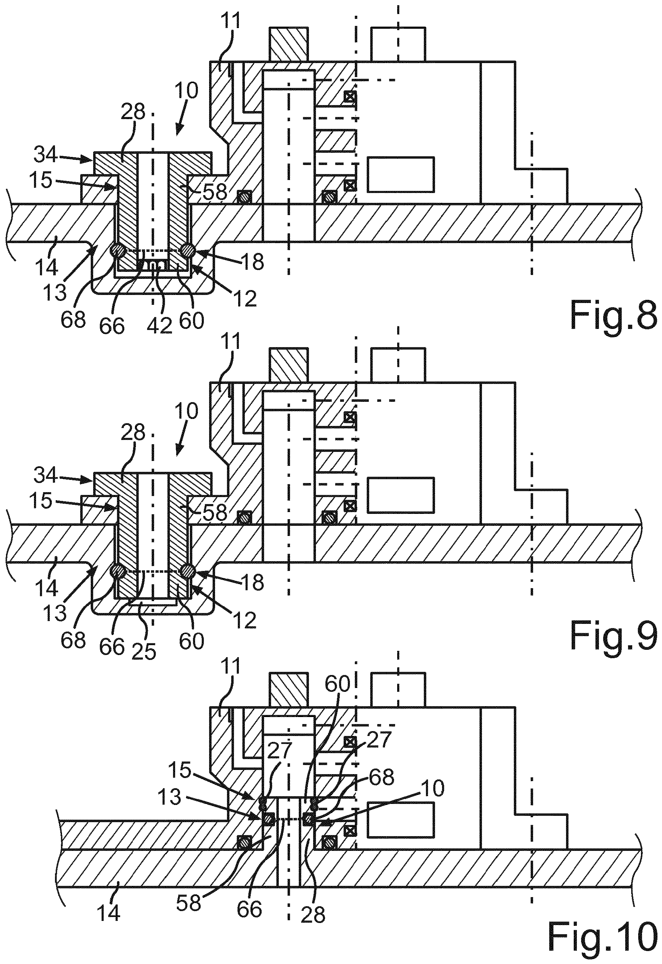

- Fig. 8: einen schematischen Teilschnitt der Befestigungsanordnung mit dem die Verbindung zwischen dem Bauelement und dem Anschlussbauteil bereitstellenden Verbindungselement, welches das Stopfenelement aufweist, welches wiederum eine Trennstelle zwischen einem ersten Teil und einem zweiten Teil des Stopfenelements aufweist, wobei an den Teilen jeweils ein Werkzeug zum Trennen des Stopfenelements an der Trennstelle anlegbar ist, wobei durch das Trennen des Stopfenelements in die beiden Teile ein Lösen der Rastverbindung ermöglicht wird;
- Fig. 9: einen schematischen Teilschnitt der Befestigungsanordnung mit dem Verbindungselement, dessen zweiter Teil des Stopfenelements radial relativ zum Anschlussbauteil über einen Formschluss festgelegt ist und dessen erster Teil des Stopfenelements einen Werkzeugangriff aufweist, welcher von außen für ein Werkzeug zum Trennen des ersten Teils vom zweiten Teil zugänglich ist;
- Fig. 10: einen schematischen Teilschnitt der Befestigungsanordnung mit dem Verbindungselement, welches einstückig mit dem Anschlussbauteil ausgebildet ist und zum Ausbilden der Rastverbindung in die Öffnung des Bauelements eingesteckt und in dieser Öffnung verrastet ist, wobei das Verbindungselement einen Mittelkanal aufweist, über welchen das Anschlussbauteil mit dem Bauelement fluidisch verbunden ist;

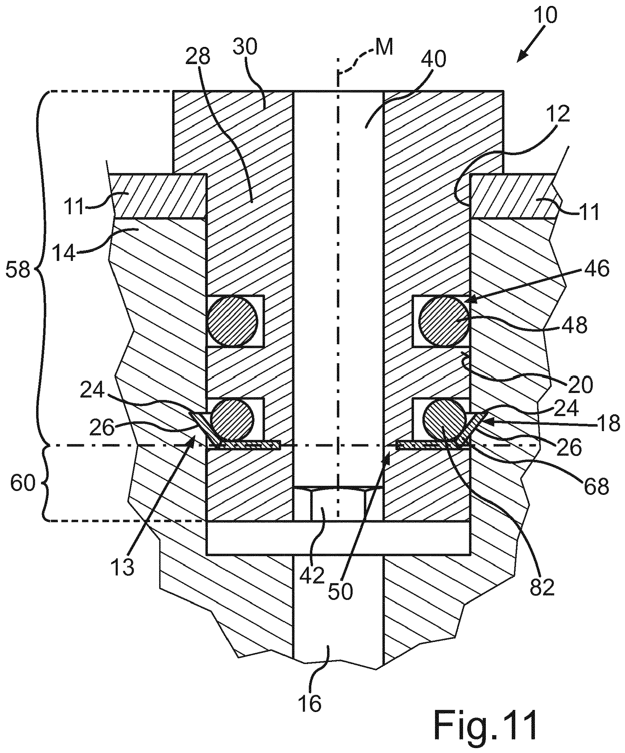

- Fig. 11: eine ausschnittsweise Schnittansicht der Befestigungsanordnung des Verbindungselements in der Öffnung des Anschlussbauteils, wobei das Verbindungselement das Stopfenelement umfasst, welches in die Öffnung des Anschlussbauteils einsteckbar ist und welches eine Aufnahmenut aufweist, in welcher ein Fixierungselement in Form eines Krallenelements zur Fixierung des Stopfenelements in der Öffnung angeordnet ist, wobei das Stopfenelement im Bereich der Aufnahmenut für das Krallenelement eine Sollbruchstelle aufweist, an welcher der erste und der zweite Teil des Stopfenelements voneinander trennbar sind;

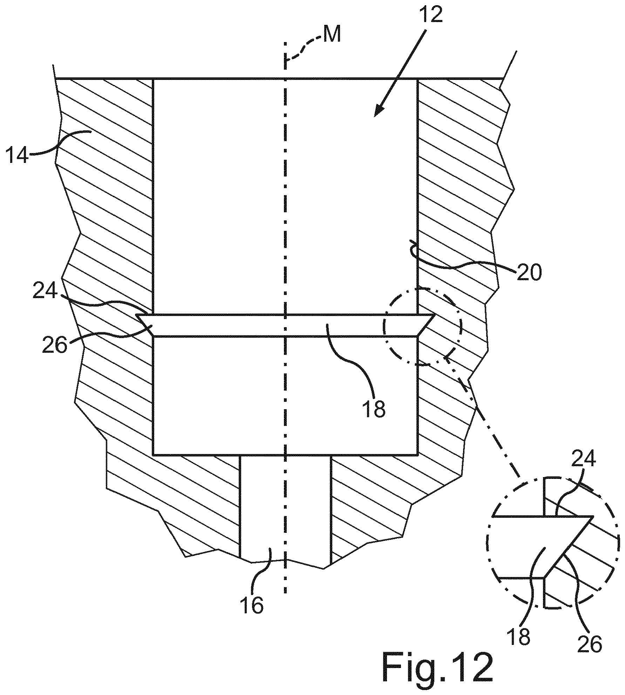

- Fig. 12: eine ausschnittsweise Schnittansicht sowie eine vergrößerte Detailansicht auf die Öffnung innerhalb des Anschlussbauteils, in welche das Verbindungselement eingesetzt ist und an deren Begrenzungswand eine umlaufende Nut zur Aufnahme des freien Endes des Kragenbereichs des Krallenelements des Verbindungselements vorgesehen ist, sowie eine vergrößerte Darstellung der im Detail dargestellten Nut;

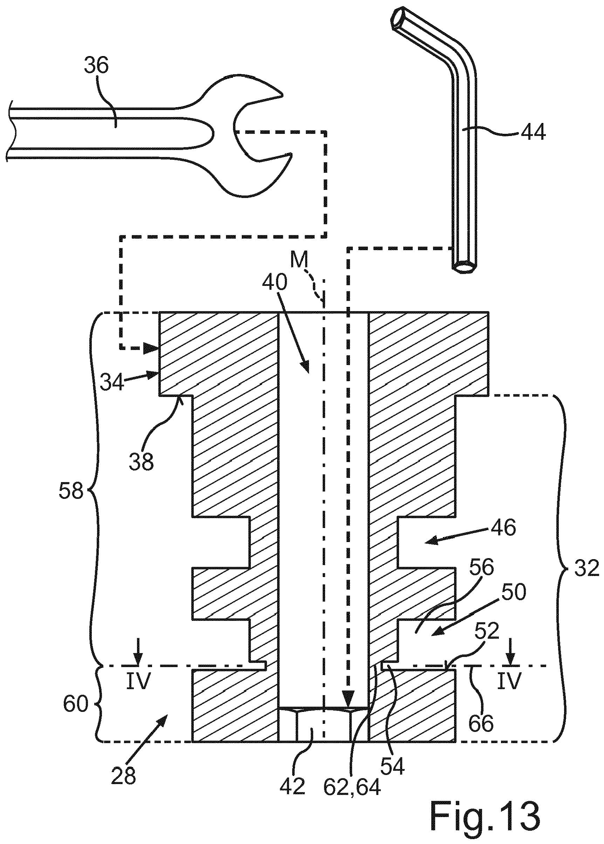

- Fig. 13: eine Schnittansicht durch das Stopfenelement des Verbindungselements, wobei insbesondere jeweilige Werkzeugangriffe für einen Schlüssel und einen Innensechskantschlüssel angedeutet sind;

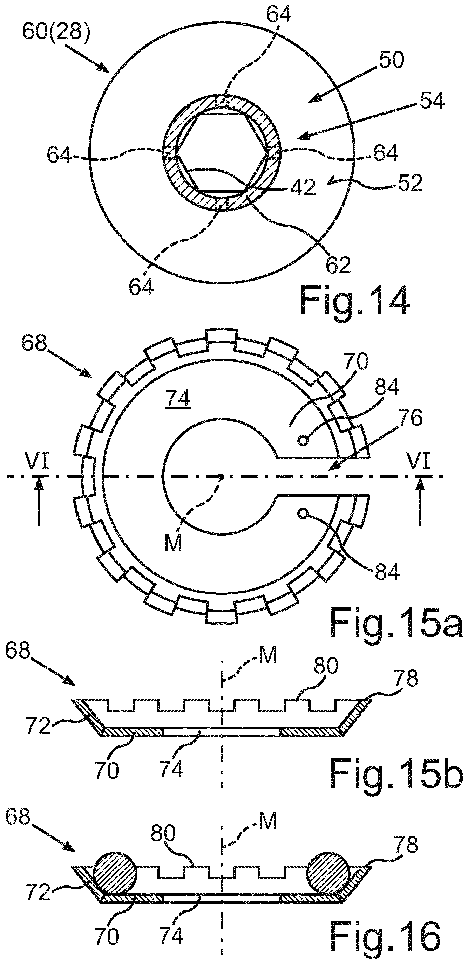

- Fig. 14: eine Schnittansicht durch das Stopfenelement entlang einer durch die Linie IV-IV in Fig. 13 symbolisierten Schnittebene, welche senkrecht zu einer Mittellängsachse des Stopfenelements verläuft;
- Fig. 15a, 15b: eine Draufsicht auf das Krallenelement des Verbindungselements sowie auf eine Schnittansicht durch das Krallenelement entlang einer Schnittlinie Vb-Vb in Fig. 15a durch das Krallenelement;
- Fig. 16: eine Schnittansicht durch das Krallenelement analog zu Fig. 15b, wobei außerdem ein elastisches Stützelement in Form eines O-Rings erkennbar ist, mittels welchem ein gegenüber einem ebenen Bereich schräg verlaufender Bereich des Krallenelements elastisch-federnd abgestützt ist;

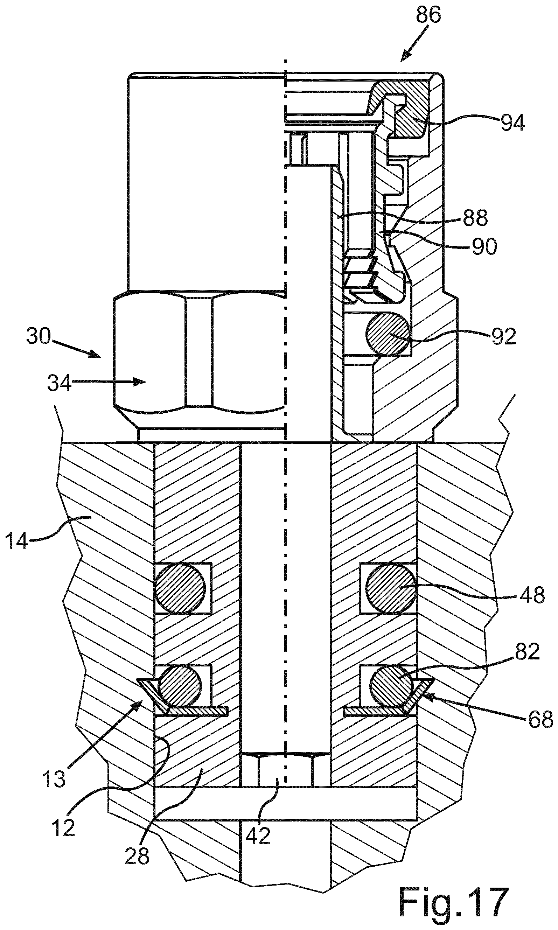

- Fig. 17: eine ausschnittsweise Schnittansicht der Befestigungsanordnung des Verbindungselements in der Öffnung des Anschlussbauteils analog zu Fig. 11, wobei der Kopf des Stopfenelements mit einem Anschluss für eine medienführende Leitung ausgebildet ist;

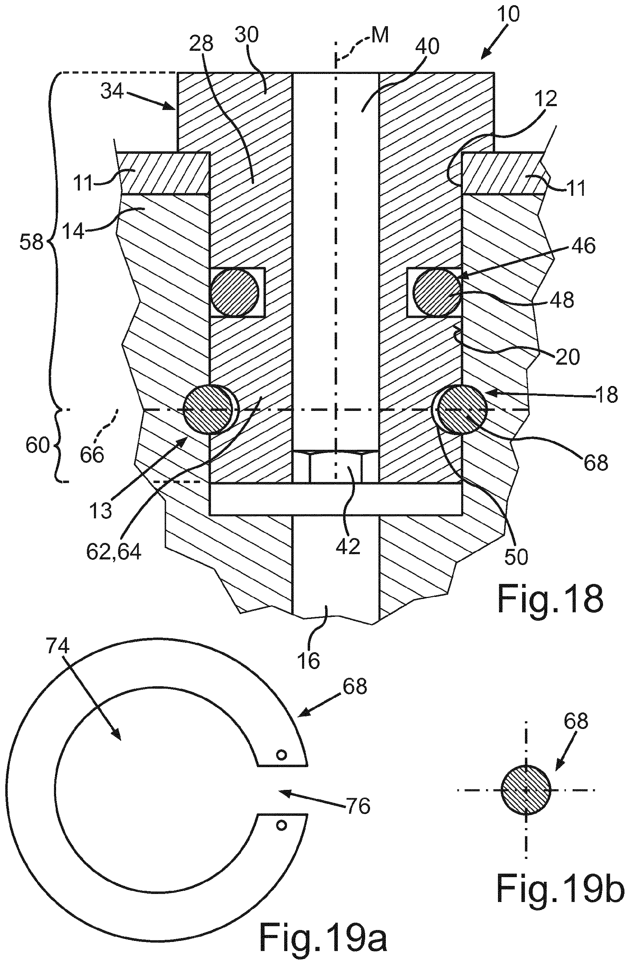

- Fig. 18: eine ausschnittsweise Schnittansicht der Befestigungsanordnung des Verbindungselements in der Öffnung des Anschlussbauteils analog zu Fig. 11, wobei alternativ zu dem Krallenelement ein Fixierungselement in Form des Sicherungsrings zur Fixierung des Stopfenelements in der Öffnung des Anschlussbauteils vorgesehen ist;
- Fig. 19a, 19b: eine Draufsicht auf und eine Schnittansicht durch das als Sicherungsring ausgebildete Fixierungselement gemäß Fig. 18;

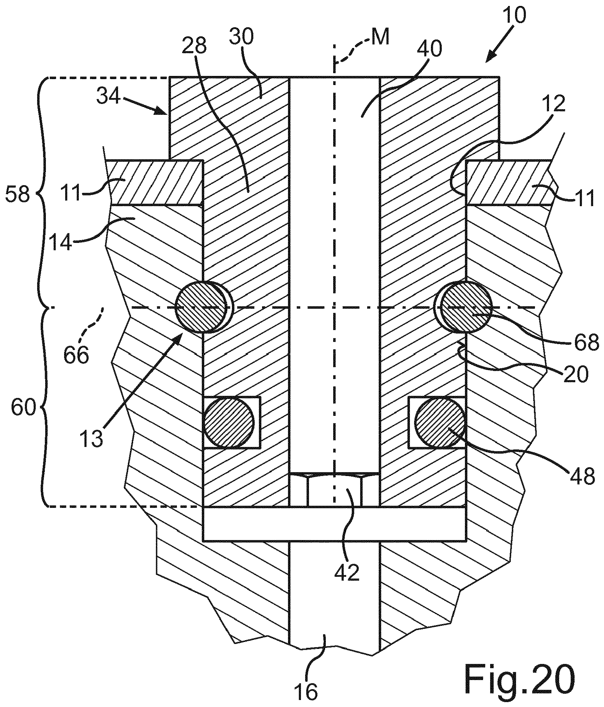

- Fig. 20: eine ausschnittsweise Schnittansicht der Befestigungsanordnung des Verbindungselements in der Öffnung des Anschlussbauteils analog zu Fig. 18, wobei das alternativ zu dem Krallenelement vorgesehene Fixierungselement in Form eines Sicherungsrings zur Fixierung des Stopfenelements in der Öffnung des Anschlussbauteils im Unterschied zur Ausführungsform gemäß Fig. 18 außenseitig eines Dichtrings angeordnet ist; und in

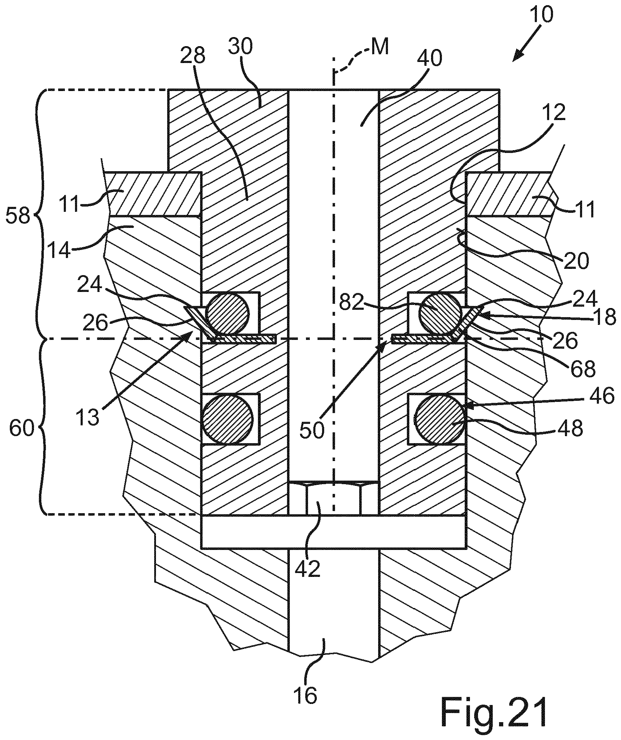

- Fig. 21: eine ausschnittsweise Schnittansicht der Befestigungsanordnung des Verbindungselements in der Öffnung des Anschlussbauteils analog zu Fig. 11, wobei das Krallenelement im Unterschied zur Ausführungsform gemäß Fig. 11 außenseitig eines Dichtrings angeordnet ist.

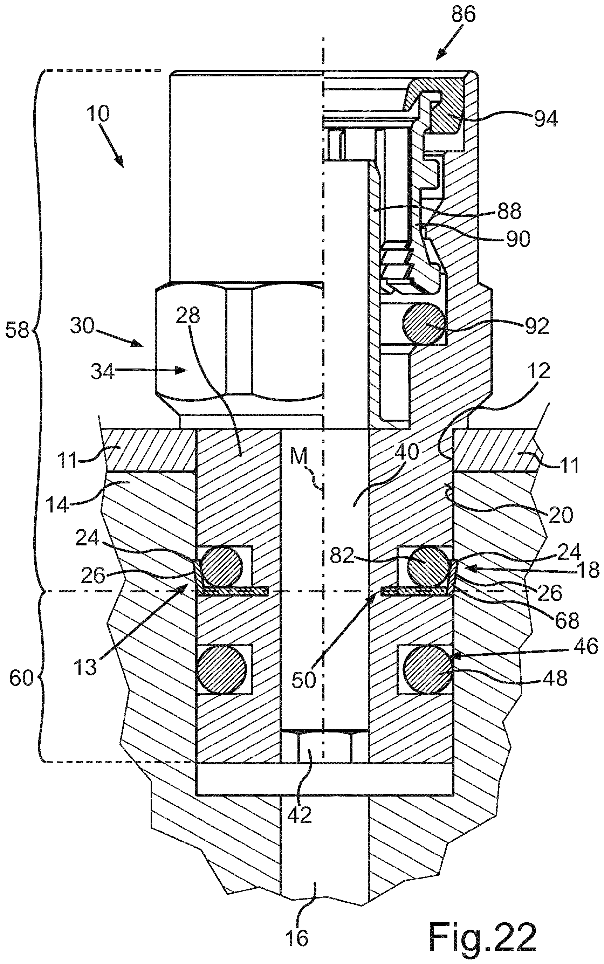

- Fig. 22: eine ausschnittsweise Schnittansicht der Befestigungsanordnung des Verbindungselements in der Öffnung des Anschlussbauteils analog zu Fig. 17, wobei in Einsteckrichtung des Verbindungselements in die Öffnung das Fixierungselement in einer Aufnahmenut angeordnet ist, welche hinter einer einen Dichtring aufnehmenden weiteren Aufnahmenut angeordnet ist;

Sämtliche der im Folgenden beschriebenen Merkmale der unterschiedlichen Ausführungsformen können beliebig miteinander kombiniert werden.

In Fig. 1 ist in einer schematischen Schnittansicht eine Luftfederanlage für ein Kraftfahrzeug ausschnittsweise dargestellt. Die Luftfederanlage umfasst ein Bauelement 11, welches an einem Anschlussbauteil 14 befestigt ist. Bei dem Bauelement 11 handelt es sich vorliegend um eine Ventileinrichtung und bei dem Anschlussbauteil 14 handelt es sich vorliegend um eine Luftfeder. Das Bauelement 11 ist an dem Anschlussbauteil 14 mittels eines Verbindungselements 10 unter Ausbildung einer lösbaren Rastverbindung 13 fixiert.

In Fig. 1 umfasst das Verbindungselement 10 ein zylinderförmiges Stopfenelement 28 sowie ein Fixierungselement 68, bei welchem es sich insbesondere um ein Krallenelement oder um einen Sicherungsring handelt. Das Stopfenelement 28 ist an das Anschlussbauteil 14 angespritzt und ragt bei bestehender Rastverbindung 13 zwischen dem Anschlussbauteil 14 und dem Bauelement 11 durch eine Öffnung 15 des Bauelements 11 hindurch. Der Sicherungsring hintergreift die Öffnung 15 des Bauelements 11 an einer dem Anschlussbauteil 14 abgewandten Seite der Öffnung 15. Der Sicherungsring kann insbesondere umfangsseitig eine Unterbrechung aufweisen, an welcher der Sicherungsring zum Lösen der Rastverbindung aufdehnbar ist. Insbesondere kann der Sicherungsring wenigstens zwei Löcher an jeweiligen Enden des offenen Sicherungsrings aufweisen, in welche ein Werkzeug zum Greifen der Enden und zum Auseinanderbiegen des Sicherungsrings eingreifen kann.

In Fig. 2 ist in einer geschnittenen Ansicht die Befestigungsanordnung dargestellt, bei welcher das Fixierungselement 68, insbesondere der Sicherungsring, die Öffnung 15 des Bauelements 11 an der dem Anschlussbauteil 14 abgewandten Seite zum Ausbilden der Rastverbindung 13 hintergreift. Das Stopfenelement 28 ist des Weiteren in eine Öffnung 12 des Anschlussbauteils 14 eingeschraubt. Hierfür weisen das Stopfenelement 28 und die Öffnung 12 des Anschlussbauteils 14 zumindest bereichsweise miteinander korrespondierende Gewinde 17 auf.

In Fig. 3 ist die Befestigungsanordnung schematisch und geschnitten dargestellt, wobei die Öffnung 15 des Bauelements 11 an der dem Anschlussbauteil 14 abgewandten Seite durch das Fixierungselement 68, insbesondere den Sicherungsring zum Ausbilden der Rastverbindung hintergriffen wird. Das Stopfenelement 28 ist stoffschlüssig mit dem Anschlussbauteil 14 verbunden, insbesondere an das Anschlussbauteil 14 angeschweißt. Um eine genaue Positionierung des Stopfenelements 28 in der Öffnung 15 des Bauelements 11 zu ermöglichen, kann das Stopfenelement 28 in seinem Querschnitt wenigstens zwei unterschiedliche Durchmesser aufweisen. Hierunter ist zu verstehen, dass eine in der Fig. 3 linke Hälfte des Stopfenelements 28 einen anderen Durchmesser aufweist, als die in der Fig. 3 rechte Hälfte des Stopfenelements 28. Insbesondere kann das Stopfenelement in seinem Querschnitt über seinen Umfang ungleichförmig und somit unregelmäßig ausgebildet sein, sodass das Stopfenelement 28 genau in einer Position beziehungsweise Ausrichtung durch die Öffnung 15 des Bauelements 11 durchsteckbar ist. Diese Positionierung ermöglicht, dass eine Fluidführung des Stopfenelements 28 mit einer Fluidführung des Bauelements 11 in Überdeckung gebracht wird, um ein Fluid über die Fluidführungen zwischen dem Bauelement 11 und dem Stopfenelement 28 auszutauschen. Die ungleichförmige Ausgestaltung des Stopfenelements 28 ermöglicht, dass eine Montageverwechslung, in welcher die jeweiligen Fluidführungen überdeckungsfrei angeordnet sind, unterbunden werden kann.

Fig. 4 zeigt einen schematischen Teilschnitt der Befestigungsanordnung sowie eine Draufsicht auf das Verbindungselement 10. Bei dieser Befestigungsanordnung ist das Stopfenelement 28 des Verbindungselements 10 einstückig mit dem Anschlussbauteil 14 ausgebildet. Des Weiteren ist das Stopfenelement 28 durch die Öffnung 15 des Bauelements 11 hindurchgesteckt. Zum Ausbilden der Rastverbindung 13 hintergreift der Sicherungsring die Öffnung 15 des Bauelements 11 an einer dem Anschlussbauteil 14 abgewandten Seite der Öffnung 15. Der in Fig. 4 in der Draufsicht dargestellte Sicherungsring ist umfangsseitig geschlossen. Um die Rastverbindung 13 zu lösen kann der Sicherungsring mittels des Werkzeugs aufgebogen werden. Hierbei kann es sich bei dem Werkzeug um einen Schraubenschlüssel handeln. Um das Aufdehnen des elastischen Sicherungsrings zu ermöglichen, weist das Stopfenelement 28, wie sowohl im Teilschnitt, als auch in der Draufsicht erkannt werden kann, zumindest im Bereich des Sicherungsrings eine Kerbe 29 auf. Diese Kerbe 29 erstreckt sich bis zu einer Aufnahmenut 50 des Stopfenelements 28, in welcher der Sicherungsring bei bestehender Rastverbindung 13 angeordnet ist. Über die Kerbe 29 kann das Werkzeug von außen in die Aufnahmenut 50 eingreifen, um den Sicherungsring zu Dehnen und aus der Aufnahmenut 50 herauszudrücken. Nach Entfernen des Sicherungsrings ist die Rastverbindung 13 gelöst und das Stopfenelement 28 kann zum Demontieren des Bauelements 11 von dem Anschlussbauteil 14 aus der Öffnung 15 des Bauelements 11 herausgezogen werden.

In den Fig. 1 bis 4 sind jeweils zerstörungsfrei lösbare Rastverbindungen 13 dargestellt, bei welchen durch Eingreifen des Werkzeugs in das Fixierungselement 68 das Fixierungselement 68 entfernbar ist und durch Entfernen des Fixierungselements 68 die Rastverbindung 15 lösbar ist. Alternativ zu den in den Fig. 1 bis 4 gezeigten Darstellungen kann das Stopfenelement 28 an das Bauelement 11 angespritzt oder angeschweißt oder in dieses eingeschraubt sein und durch die Öffnung 12 des Anschlussbauteils 14 hindurchgesteckt sein, wobei das Fixierungselement 68 die Öffnung 12 des Anschlussbauteils 14 an der dem Bauelement 11 abgewandten Seite des Anschlussbauteils 14 hintergreift. Das Verbindungselement 11 kann somit einteilig mit dem Anschlussbauteil 14 oder einteilig mit dem Bauelement 11 ausgebildet sein.

Alternativ kann das Verbindungselement 10, wie in den Fig. 5 und 6 dargestellt ist, sowohl separat von dem Bauelement 11 als auch von dem Anschlussbauteil 14 ausgebildet sein. In Fig. 5 ist ein Teilschnitt der Befestigungsanordnung dargestellt. Das Verbindungselement 10 weist hierbei einen kreisrunden scheibenförmigen Grundkörper auf, von welchem wenigstens ein, insbesondere drei Rastfüße 19 als Rastelemente, und somit insbesondere als Fixierungselemente, abstehen. Die jeweilige Rastfüße 19 durchdringen die Öffnung 15 des Bauelements 11 und greifen in jeweilige korrespondierende Aufnahmevertiefungen 18 des Anschlussbauteils 14 ein. Insbesondere verrasten die Rastfüße 19 in den korrespondierenden Aufnahmevertiefungen 18 des Anschlussbauteils 14. Das Verbindungselement 10 weist jeweilige den Rastfüßen 19 zugeordnete Öffnungen 21 im Grundkörper auf, in welche ein Werkzeug 22 eingreifen kann um die Rastfüße 19 aus den Aufnahmevertiefungen 18 heraus zu bewegen.

In Fig. 6 ist in einem schematischen Teilschnitt die Befestigungsanordnung gemäß Fig. 5 dargestellt, wobei in die Öffnungen 21 des Verbindungselements 10 das Werkzeug 22 eingreift. Das Werkzeug 22 weist mit den Öffnungen 21 des Verbindungselements 10 korrespondierende Überstandselemente 23 auf, welche zum Lösen der Rastverbindung 13 in die Öffnungen 21 eingreifen. Mittels der Überstandselements 23 sind die Rastfüße 19 aus den Aufnahmevertiefungen 18 herausdrückbar, insbesondere indem die Rastfüße 19 umgebogen und/oder verschwenkt werden. Um das Umbiegen beziehungsweise das Verschwenken der Rastfüße 19 zu ermöglichen, sind die Rastfüße 19 elastisch ausgebildet. Durch das Herausbewegen der Rastfüße 19 aus den Aufnahmevertiefungen 18 wird die Rastverbindung 13 gelöst und das Verbindungselement 10 kann aus der Öffnung 15 des Bauelements 11 entnommen werden.

Zum Montieren des Bauelements 11 an dem Anschlussbauteil 14 wird das Bauelement 11 auf das Anschlussbauteil 14 aufgelegt. Das Verbindungselement 11 wird gemeinsam mit dem Werkzeug 22 in die Öffnungen 15 des Bauelements 11 und 12 des Anschlussbauteils 14 gesteckt, wodurch zumindest der Rastfuß 19, welcher auch als Rastnase bezeichnet werden kann, in die Öffnung 12 des Anschlussbauteils 14 eingesteckt ist. Mittels des Werkzeugs 22 sind die Rastfüße 19 in Richtung der Mittelachse des Verbindungselements 10 gedrückt. Wird das Werkzeug 22 aus den Öffnungen 21 des Verbindungselements 10 entnommen, verhaken sich die Rastfüße 19 in den Aufnahmevertiefungen 18 des Anschlussbauteils 14, welche in der Öffnung 12 des Anschlussbauteils 14 angeordnet sind.

Zum Demontieren des Bauelements 11 von dem Anschlussbauteil 14 wird das Werkzeug 22, insbesondere die Überstandselemente 23, in die Öffnungen 21 des Verbindungselements 10 gedrückt, wodurch die Rastfüße 19 aus den Aufnahmevertiefungen 18 des Anschlussbauteils 14 gedrückt werden. Anschließend wird das Verbindungselement 10 in seinem mit dem Werkzeug 22 verbundenen Zustand aus den Öffnungen 12, 15 des Anschlussbauteils 15 sowie des Bauelements 11 entnommen. Anschließend kann das Bauelement 11 von dem Anschlussbauteil 14 getrennt werden.

In Fig. 7 ist das Verbindungselement 10 in einer schematischen Draufsicht dargestellt, wobei erkannt werden kann, dass die den Rastfüßen 19 zugeordneten Öffnungen 21 jeweils in einem Winkel von 120 Grad relativ zueinander angeordnet sind.

In Fig. 8 ist in einem schematischen Teilschnitt die Befestigungsanordnung dargestellt, wobei das Bauelement 11 an dem Anschlussbauteil 14 über das separat zum Anschlussbauteil 14 und dem Bauelement 11 ausgebildete Verbindungselement 10 verbunden ist. Das Stopfenelement 28 ist durch die Öffnung 15 des Bauelements 11 hindurch gesteckt und in die Öffnung 12 des Anschlussbauteils 14 eingesteckt. An dem Stopfenelement 28 ist das Fixierungselement 68, insbesondere der Sicherungsring angeordnet, welcher in der Öffnung 12 des Anschlussbauteils 14 unter Ausbildung der Rastverbindung 13 in die Aufnahmevertiefung 18 eingreift. Das Stopfenelement 28 weist eine Trennstelle 66 auf, an welcher das Stopfenelement 28 zum Lösen der Rastverbindung 13 in ein erstes Teil 58 und ein zweites Teil 60 unterteilbar ist. Die Trennstelle 66 ist insbesondere in einem Bereich der Aufnahmevertiefung 18 angeordnet. Zum Trennen des ersten Teils 58 von dem zweiten Teil 60 weist das erste Teil 58 einen ersten Werkzeugangriff 34 auf und das zweite Teil 60 weist einen zweiten Werkzeugangriff 42 auf. Vorliegend korrespondiert der erste Werkzeugangriff 34 mit einem Gabelschlüssel 36 und der zweite Werkzeugangriff 42 korrespondiert mit einem Innensechskantschlüssel 44. Das erste Teil 58 und das zweite Teil 60 werden mittels der Werkzeuge um eine Mittelachse des Stopfenelements 28 in entgegengesetzten Drehrichtungen verdreht um die Teile 58, 60 unter Torsion an der Trennstelle 66 zu trennen.

In Fig. 9 ist die Befestigungsanordnung in einem weiteren schematischen Teilschnitt dargestellt, wobei das Stopfenelement 28 anstelle des zweiten Werkzeugangriffs 42 eine Festlegung 25 aufweist, mittels welcher der zweite Teil 60 des Stopfenelements 28 drehfest zum Anschlussbauteil 14 festlegbar ist. Bei der Festlegung 25, mittels welcher das zweite Teil 60 radial festlegbar ist, kann es sich um einen Formschluss und/oder einen Kraftschluss zwischen dem zweiten Teil 60 und dem Anschlussbauteil 14 handeln. Um das Stopfenelement 28 unter Torsion an der Trennstelle 66 zu trennen, wird an dem ersten Werkzeugangriff 34 ein Werkzeug, insbesondere der Gabelschlüssel 36 angelegt, um den ersten Teil 58 des Stopfenelements 28 relativ zum zweiten Teil 60 zu verdrehen. Als kraftschlüssige Festlegung kann das zweite Teil 60 in der Öffnung 12 des Anschlussbauteils 14 mittels eines Klebstoffs 27 verklebt sein. Alternativ oder zusätzlich kann als die Festlegung insbesondere zur formschlüssigen Festlegung der zweite Teil 60 eine umfangsseitige Außenkontur aufweisen, welche mit einer umfangsseitigen Innenkontur der Öffnung 12 des Anschlussbauteils 14 korrespondiert, sodass bei Bestehen der Rastverbindung 13 die umfangsseitige Außenkontur des zweiten Teils 60 an der umfangsseitigen Innenkontur der Öffnung 12 anliegt. Beispielsweise sind sowohl die Außenkontur als auch die Innenkontur jeweils mehreckig, insbesondere viereckig ausgebildet, wobei die Innenkontur und die Außenkontur derart ineinander greifen, dass eine Drehbewegung des zweiten Teils 60 um die Mittelachse des Stopfenelements 28 relativ zur Öffnung 12 des Anschlussbauteils 14 unterbunden wird.

Zusätzlich zu einer Funktion einer Befestigung des Bauelements 11 an dem Anschlussbauteil 14 kann das Verbindungselement 10, wie in Fig. 10 dargestellt ist, eine fluidische Verbindung über eine Mittelkanal zwischen dem Anschlussbauteil 14 und dem Bauelement 11 bereitstellen. Hierfür kann das Anschlussbauteil 14 einstückig mit dem Verbindungselement 10 ausgebildet sein, wie in Fig. 10 dargestellt ist oder alternativ das Bauelement 11 einstückig mit dem Verbindungselement 10 ausgebildet sein oder alternativ das Verbindungselement 10 sowohl separat vom Bauelement 11 als auch separat vom Anschlussbauteil 14 ausgebildet sein. Zum Ausbilden der Rastverbindung 13 greift das Fixierungselement 68, insbesondere der Sicherungsring in eine Rastaufnahme der Öffnung 15 des Bauelements 11, wie in Fig. 10 dargestellt ist, ein. Zum Lösen der Rastverbindung 13 wird das erste Teil 58 relativ zu dem zweiten Teil 60 um die Mittelachse des Stopfenelements 28 des Verbindungselements 10 gedreht, um das erste Teil 58 und das zweite Teil 60 durch Torsion an der Trennstelle 66 voneinander zu trennen. Um das Drehen des ersten Teils 58 relativ zum zweiten Teil 60 um die Mittelachse des Stopfenelements 28 in entgegengesetzten Richtungen zu ermöglichen, kann das zweite Teil 60 den zweiten Werkzeugangriff 42 aufweisen oder in der Öffnung 15 des Bauelements 11 festgelegt sein. Vorliegend ist das zweite Teil 60 über den Klebstoff 27 in der Öffnung 15 des Bauelements 11 verklebt und somit kraftschlüssig radial festgelegt.

Wie bereits beschrieben kann der Mittelkanal des Verbindungselements 10 die fluidische Verbindung des Anschlussbauteils 14 mit dem Bauelement 11 bereitstellen. Alternativ oder zusätzlich kann über den Mittelkanal eine Messverbindung von dem als Ventil- und/oder Sensoreinheit ausgebildeten Bauelement 11 zu dem als Luftfeder ausgebildeten Anschlussbauteil 14 bereitgestellt werden. Über die Messverbindung kann eine Sensoreinrichtung der Ventil- und/oder Sensoreinheit insbesondere einen Abstand zwischen dem Bauelement 11 und einem dem Bauelement 11 abgewandten Boden der Luftfeder ermitteln, um eine jeweilige Luftbefüllung der Luftfeder und somit einen Zustand der Luftfeder wie "gefüllt", "halb gefüllt" oder "nicht gefüllt", ermitteln. Hierfür kann die Sensoreinrichtung einen Messstrahl, wie einen Ultraschallstrahl oder einen Laserstrahl durch den Mittelkanal des Verbindungselements 10 hindurchleiten, um den Abstand zu ermitteln. Die Sensoreinrichtung umfasst insbesondere einen Drucksensor und/oder einen Höhensensor.

In Fig. 11 ist in einer ausschnittsweisen Schnittansicht entlang einer Mittellängsachse M eine Befestigungsanordnung des Verbindungselements 10 in der Öffnung 12 des Anschlussbauteils 14 gezeigt. Das Verbindungselement 10 dient dabei alternativ oder zusätzlich zur Befestigung des Bauelements 11 an dem Anschlussbauteil 14 beispielsweise auf im Weiteren noch näher beschriebener Weise zur Befestigung einer Leitung, insbesondere einer Medien führenden Leitung wie einer Pneumatik- oder Hydraulikleitung an dem Anschlussbauteil 14 beispielsweise in Form eines Luft- oder Hydraulik-Feder und/oder Dämpferelements. Natürlich ist die vorliegende Verbindungsanordnung auch zur Befestigung anderer Medien führender oder auch nicht Medien führender Leitungen an entsprechenden Anschlussbauteilen geeignet.

In Zusammenschau mit Fig. 12, welche das Anschlussbauteil 14 mit der vorliegend kreiszylindrischen Öffnung 12 in einer separaten, ausschnittsweisen Schnittansicht zeigt, wird erkennbar, dass sich an die Öffnung 12 ein im Querschnitt beispielsweise kreisrunder Kanal 16 anschließt, über welchen ein Medium, beispielsweise Druckluft oder Öl, über das Verbindungselement 12 und eine mit diesem verbundene Leitung durch das Anschlussbauteil 14 hindurch beispielsweise in das beschriebenen Feder- und/oder Dämpferelement gelangt. Natürlich kann das Anschlussbauteil 14 selbst das Medium aufnehmen, beispielsweise wenn das Anschlussbauteil 14 als Luftfeder ausgebildet ist.

Außerdem ist aus Fig. 12 des Weiteren die Aufnahmevertiefung 18 in Form einer in eine die Öffnung 12 außenumfangsseitig begrenzende Wand umlaufend eingebrachte Nut ausgebildet ist. Die konkrete Querschnittsgestaltung dieser in die Wand 20 eingebrachten Nut 18 ist dabei in einem vergrößerten Detail in Fig. 12 erkennbar. Im vorliegenden Ausführungsbeispiel weist die Nut 18 - wie dies aus dem Detail in Fig. 12 erkennbar ist - einen etwa dreieckförmigen Querschnitt mit einem oberen Kragen 24 und einem seitlichen Stützbereich 26 auf, an welchem auf im Weiteren noch näher beschriebene Weise ein freies Ende 78 (Fig. 15a bis 16) eines Kragenbereichs eines Krallenelements, welches im vorliegenden Fall als Fixierelement dient, hintergreifend abgestützt werden kann.

Aus Fig. 13 ist zunächst das Stopfenelement 28 des Verbindungselements 10 analog zu Fig. 11 in einer schematischen Schnittansicht dargestellt. Hierbei wird erkennbar, dass das Stopfenelement 28 einen Kopf 30 sowie einen Schaft 32 umfasst. Der Kopf 30 weist außenumfangsseitig den Werkzeugangriff 34 in Form eines Außensechskants auf, sodass am Kopf 30 beispielsweise mittels des schematisch angedeuteten Gabelschlüssels 36 angegriffen werden kann. Durch einen Kragen 38 des Kopfs 30 wird außerdem eine Einstecktiefe des Stopfenelements 28 beziehungsweise des Verbindungselements 10 insgesamt in die Öffnung 12 des Anschlussbauteils 14 bestimmt.

Der Schaft 32 weist im vorliegenden Fall einen kreisrunden Querschnitt auf, welcher zumindest im Wesentlichen an den ebenfalls kreisrunden Querschnitt der Öffnung 12 angepasst ist. Gegebenenfalls ist hierbei ein entsprechendes Spiel der Öffnung 12 vorgesehen. Natürlich können die Öffnung 12 und der Schaft 32 - entsprechend aufeinander abgestimmt - auch einen anderen Querschnitt aufweisen, beispielsweise eine rechteckförmigen oder polygonalen.

Des Weiteren ist aus Fig. 13 erkennbar, dass das Stopfenelement 28 eine Durchgangsöffnung 40 aufweist, über welche das entsprechende Medium, beispielsweise Druckluft oder Öl, durch das Verbindungselement 10 beziehungsweise das Stopfenelement 28 hindurch gelangt. An seinem dem Kopf 30 abgewandten unteren Ende umfasst das Stopfenelement 28 den innerhalb der Durchgangsöffnung 40 angeordneten Werkzeugangriff 42 in Form eines Innensechskants, sodass mittels des entsprechenden, in Fig. 13 angedeuteten Innensechskantschlüssels 44, welcher von oben her durch die Durchgangsöffnung 40 eingeführt wird, ein entsprechender Angriff erfolgen kann.

In einem Abstand unterhalb des Kopfes 30 weist der Schaft 32 eine erste Aufnahmenut 46 für eine O-Dichtring 48 (Fig. 11) auf. Die Aufnahmenut 46 beziehungsweise der Schaft 32 sind dabei in ihrem radialen Maß etwas geringer Bemessen als der Durchmesser des Dichtrings 48, sodass sich durch den Dichtring 48 eine zuverlässige Abdichtung des Verbindungselements 10 beziehungsweise des Stopfenelements 28 zur Begrenzungswand 20 der Öffnung 12 innerhalb des Anschlussbauteils 14 ergibt.

Unterhalb der Aufnahmenut 46 ist eine weitere Aufnahmenut 50 innerhalb des Schafts 32 vorgesehen, welche nach unten hin eine ebene Aufnahme beziehungsweise Aufnahmefläche 52 aufweist. Im Bereich dieser Aufnahme 52 erstreckt sich die Aufnahmenut 50 in einem Bereich 54 weiter nach innen als in einem Aufnahmebereich 56 oberhalb dieses Bereichs 54 beziehungsweise oberhalb der Aufnahme 52.

Der Bereich 54 ist dabei auf die Dicke des Krallenelements 68 abgestimmt. Die konkrete Ausgestaltung dieser Aufnahmenut 50 ergibt sich somit insbesondere aufgrund der Gestaltung eines im Weiteren unter Bezugnahme auf die Fig. 15a und 15b sowie auf Fig. 16 erläuterten Krallenelements 68.

Fig. 14 zeigt in einer Querschnittsansicht entlang einer durch die Linie IV-IV in Fig. 13 dargestellten, senkrecht zur Mittellängsachse M des Stopfenelements 28 verlaufenden Schnittebene den zweiten Teil 60 des Stopfenelements 28, welcher auf im Weiteren noch näher beschriebene Weise von dem ersten Teil 58 des Stopfenelements 28 unterteilt ist. Anhand von Fig. 14 ist dabei insbesondere nochmals erkennbar, dass im Bereich des zweiten Teils 60 des Stopfenelements 28 der als Innensechskant ausgebildete Werkzeugangriff 42 innerhalb der Durchgangsöffnung 40 angeordnet ist. Des Weiteren ist ein die Durchgangsöffnung 40 umlaufender Steg 62 erkennbar, welcher durch das Material des Stopfenelements 28 innenseitig des Bereichs 54 der Aufnahmenut 50 gebildet ist. Anstelle dieses außenumfangsseitig um die Durchgangsöffnung 40 umlaufenden Stegs 62 wäre es jedoch auch denkbar, lediglich einige Teilsteige 64 vorzusehen, von denen in Fig. 14 gestrichelt und schematisch beispielhaft vier Teilstege 64 angedeutet sind. Durch den Steg 62 beziehungsweise die Teilstege 54 wird somit der erste Teil 58 vom zweiten Teil 60 des Stopfenelements 28 unterteilt. Hierbei bildet der Steg 62 beziehungsweise die Teilstege 64 die Trennstelle 66 in Form einer Sollbruchstelle aus, an welcher die beiden Teile 58, 60 des Stopfenelements 28 im Bedarfsfall getrennt werden können. Diese Trennung erfolgt durch gegenläufiges Verdrehen der beiden Teile 58, 60 des Stopfenelements 28 mittels der beiden Werkzeuge, dem Gabelschlüssel 36 und dem Innensechskantschlüssel 44. Hierdurch kann im vorliegenden Fall an der Sollbruchstelle 66, also dem wenigstens einen Steg 62 beziehungsweise den mehreren Teilstegen 64, eine Zerstörung herbeigeführt und somit die beiden Teile 58, 60 voneinander getrennt werden.

In den Fig. 15a und 15b ist des Weiteren ein Krallenelement 68 des Verbindungselements 10 zur Fixierung des Stopfenelements 28 in der Öffnung 12 in einer schematischen Draufsicht beziehungsweise in einer Schnittansicht entlang der durch die Linie Vb-Vb in Fig. 15a symbolisierten, entlang der Mittellängsachse M verlaufenden Schnittebene. Insbesondere wird hierbei erkennbar, dass das Krallenelement 68 im Wesentlichen napfartig ausgebildet ist, mit einem ebenen, hier als Scheibe 70 ausgebildeten Bereich und einem sich radial außen anschließenden, schräg zum Bereich 70 verlaufenden Kragenbereich 72. Das Krallenelement 68 ist somit in etwa in Form eines Kronkorkens gestaltet und weist vorliegend eine zentrale Öffnung 74 auf, welche außenumfangsseitig durch die Scheibe 70 begrenzt ist. Diese Öffnung 74 ist im Querschnitt beziehungsweise Durchmesser an die Form und Anordnung des Stegs 62 beziehungsweise der Teilstege 74 angepasst, so dass das Krallenelement 68 in seiner radialen Position relativ zum Stopfenelement 28 fixiert ist.

Das Krallenelement 68 ist außerdem mit einem Schlitz 76 versehen, sodass sowohl der scheibenförmige Bereich 70 als auch der Kragenbereich 72 entsprechend unterteilt ist. Über diesen Schlitz 76 ist das Krallenelement 68 auf die Aufnahmenut 46 des Stopfenelements aufschiebbar, wie dies aus Fig. 11 erkennbar ist. In der vollständig aufgeschobenen Position liegt der scheibenförmige Bereich 70 an der Aufnahmefläche 52 der Aufnahmenut 50 an. Der Kragenbereich 72 steht hierbei nach oben hin, also in Richtung der Außenseite des Anschlussbauteils 14 hin, ab. Wie des Weiteren aus den Fig. 15a und 15b erkennbar ist, weist das Krallenelement 68 beziehungsweise dessen Kragenbereich 70 ein umlaufendes freies Ende 78 beziehungsweise einen Randbereich auf, an welchem im vorliegende Fall eine Mehrzahl von Zähnen beziehungsweise Zinken 80 vorgesehen sind. Diese Zinken 80 sind so ausgebildet, dass sie in die Aufnahmevertiefung beziehungsweise Nut 18 innerhalb der Begrenzungswand 20 der Öffnung 12 eingreifen können. Mit anderen Worte ist die Position der Nut 18 innerhalb der Begrenzungswand der Öffnung 12 so angeordnet, dass diese bei vollständig eingestecktem Verbindungselement 10, bei welcher der Kopf 30 auf der Oberseite des Anschlussbauteils 14 aufsitzt, in Eingriff ist mit dem Ende 78 beziehungsweise den Zinken 80 des Krallenelements 68. Die dreieckförmige Geometrie der Aufnahmevertiefung beziehungsweise Nut 18 ist dabei auf die Form beziehungsweise Orientierung des Endes 78 des Kragenbereichs 72 des Krallenelements 68 abgestimmt. An dieser Stelle sei jedoch erwähnt, dass die innerhalb der Begrenzungswand 20 vorgesehene Aufnahmevertiefung 18 beziehungsweise Nut nicht zwingender maßen erforderlich ist. Es sind insbesondere auch Varianten denkbar, bei welchen sich ein sicherer Halt beziehungsweise eine sichere Positionierung des Verbindungselements 10 innerhalb der Öffnung 12 mittels des Krallenelements 68 auch ohne eine derartige Aufnahmevertiefung beziehungsweise Nut 18 realisieren lässt, wie im Folgenden im Zusammenhang mit Fig. 22 beschrieben werden wird. In diesem Fall ist es beispielsweise denkbar, dass sich das Ende 78 beziehungsweise die jeweiligen Zinken 80 des Krallenelements 68 innerhalb der Begrenzungswand 20 der Öffnung 12 des Anschlussbauteils 14 verhaken beziehungsweise in diese eingraben. Hierzu können die Zinken 80 gegebenenfalls scharfkantig gestaltet sein.

Somit ist erkennbar, dass durch die Abstützung des Krallenelements 68 an der Aufnahmefläche 52 der Aufnahmenut 50 des Stopfenelements 28 sowie radial an dem Steg 72 beziehungsweise den Teilstegen 74 einerseits und durch die Abstützung des Krallenelements 68 an der Nut 18 in der Begrenzungswand 20 der Öffnung 12 andererseits eine sichere Fixierung des Verbindungselements 10 an dem Anschlussbauteil 14 erreicht wird.

Um dabei eine besonders günstige Abstützung des Endes 78 des Kragenbereichs 72 des Krallenelements 68 an der Begrenzungswand 20 der Öffnung12 zu erreichen, ist der Kragenbereich 72 - wie dies aus Fig. 16 in einer schematischen Schnittansicht des Krallenelements 68 analog zu Fig. 15b erkennbar ist - durch ein elastisches Stützelement 82 - beispielsweise in Form eines O-Rings aus einem unelastischen Material nach außen hin abgestützt. Dabei ist es beispielsweise denkbar, dass das Stützelement 82 an das Krallenelement 68 anvulkanisiert oder dergleichen fixiert ist. In diesem Zusammenhang ist es auch denkbar, dass der Kragenbereich 72 und die Scheibe 70 getrennt voneinander über ein scharnierartiges Element, beispielsweise ein Filmscharnier oder dergleichen, miteinander verbunden sind. Das Krallenelement 68 beziehungsweise dessen Einzelteile können insbesondere aus einem Metall oder einem Kunststoff hergestellt sein.

Das Stopfenelement 28 ist vorzugsweise aus einem Kunststoff gestaltet, wobei auch ein Metall denkbar wäre.

Zum Montieren des Verbindungselements 10 an dem Anschlussbauteil 14 wird demzufolge das Stopfenelement 28 um das Krallenelements 68 ergänzt. Hierbei stützt sich die Scheibe 70 an der Aufnahme 52 der Aufnahmenut 50 des Stopfenelements 28 ab und der Kragenbereich 72 verläuft im Aufnahmebereich 56 der Aufnahmenut 50, wobei sich das Ende 78 beziehungsweise die Zinken 80 nach außen hin etwas über den Durchmesser beziehungsweise Radius des Schafts 32 des Stopfenelements 28 nach außen hin erstrecken. Wie erwähnt, ist die Öffnung 74 des Krallenelements 68 dabei vorzugsweise zumindest im Wesentlichen auf die Gestalt beziehungsweise den Durchmesser des Stegs 62 beziehungsweise der Teilstege 64 angepasst. Somit ergibt sich beim Aufstecken des Krallenelements 68 auf das Stopfenelement 28 eine sichere Positionierung des Krallenelements 28 an dem Steg 62 beziehungsweise an den Teilstegen 64 und mithin an dem Stopfenelement 28 insgesamt. Im hier gezeigten Fall sind der Schaft 32 des Stopfenelements 28 und die Öffnung 12 im Anschlussbauteil 14 zylinderförmig gestaltet. Besonders günstig ist es jedoch auch, wenn der Schaft 32 des Stopfenelements 28 und die Öffnung 12 im Anschlussbauteil 14 - aufeinander abgestimmt - jeweils einen Konus aufweisen und demzufolge leicht kegelstumpfförmig - mit dem kleineren Querschnitt in Richtung nach Innen des Anschlussbauteils 14 weisend - ausgebildet sind. Hierdurch ergibt sich ein besonders günstiger Sitz des Schafts 32 des Stopfenelements 28 in der Öffnung 12 des Anschlussbauteils 14.

Im weiteren Verlauf des Montageprozesses kann dann das Verbindungselement 10 - umfassend das Stopfenelement 28 und das Krallenelement 68 - in die Öffnung 12 eingeschoben werden, bis der Kopf 30 auf der Außenseite des Anschlussbauteils 14 aufsitzt. Falls eine Aufnahmevertiefung beziehungsweise Nut 18 in der Begrenzungswand 20 der Öffnung 12 vorgesehen ist, kommt es mit dem Aufsetzen des Kopfs 30 auf dem Anschlussbauteil 14 auch zum Verrasten der Zinken 80 mit der Aufnahmevertiefung beziehungsweise Nut 18. Das Verbindungselement 10 ist somit auf besonders sichere und zuverlässige Weise gegen einen Auszug gesichert.

Sollte es in Folge eines Verschleiß oder aus anderen Gründen zu einer Demontage des Verbindungselements 10 kommen, so kann in der zuvor beschriebenen Weise eine Zerstörung/Unterteilung des Stopfenelements 28 in die beiden Teile 58 beziehungsweise 60 erreicht werden, indem mittels der Werkzeuge 36 und 44 die beiden Teile 58, 60 gegeneinander verdreht werden. Infolgedessen kommt es zu einem Bruch des Stopfenelements 28 im Bereich der Sollbruchstelle 60, woraufhin der erste Teil 58 aus der Öffnung 12 entnommen werden kann. Im Weiteren kann sodann das Krallenelement 68 entnommen werden. Hierbei kann das Krallenelement 68 beispielsweise einen Werkzeugangriff 84 aufweisen, welcher in Fig. 15a dargestellt ist. Nach der Entnahme des Krallenelements 68 kann dann ohne Probleme der zweite Teil 60 des Stopfenelements 28 entnommen werden, sodass sich auf einfache Weise das Entfernen des Verbindungselements 10 realisieren lässt.

An dieser Stelle sei erwähnt, dass die Trennstelle 66 der beiden Teile 58, 60 des Stopfenelements 28 nicht nur durch eine Sollbruchstelle realisiert werden kann. Beispielsweise wäre auch eine zweiteilige Gestaltung der beiden Teile 58, 60 denkbar, welche beispielsweise durch einen Fügverbindung, insbesondere durch eine Klebverbindung, miteinander verbunden sind. Im Bedarfsfall könnte dann eine Trennung beziehungsweise Zerstörung des Stopfenelements 28 im Bereich dieser Fügeverbindung vorgenommen werden. Ebenfalls wäre es denkbar, die beiden Teile 58, 60 über eine Schraubverbindung miteinander zu verbinden, wobei durch den Werkzeugansatz diese Schraubverbindung als Trennstelle 66 fungieren könnte, an welcher die beiden Teile 58, 60 voneinander getrennt werden könnten.

Fig. 17 zeigt eine ausschnittsweise Schnittansicht der Befestigungsanordnung des Verbindungselements 10 in der Öffnung 12 des Anschlussbauteils 14 analog zu Fig. 11, wobei der Kopf 30 des Stopfenelements 28 einen Anschluss 86 für eine medienführende Leitung beispielsweise in Form eines Schlauchs oder dergleichen umfasst. Der Anschluss 86 wird dabei im Wesentlichen gebildet durch einen Aufnahmestutzen 88, der von einer Klemmhülse 90 außenumfangsseitig umgeben ist, mittels welcher die medienführende Leitung am Aufnahmestutzen 88 gehalten ist. Darüber hinaus sind ein innerer und ein äußerer Dichtring 92, 94 als Teile des Anschlusses 86 vorgesehen. Anstelle des hier gezeigten Aufbaus kann die jeweilige, medienführende Leitung auch auf andere Weise an das Verbindungelement 10 angeschlossen sein.

In Fig. 18 ist in einer ausschnittsweisen Schnittansicht die Befestigungsanordnung des Verbindungselements 10 in der Öffnung 12 des Anschlussbauteils 14 analog zu Fig. 11 dargestellt, wobei alternativ zu dem Krallenelement ein Fixierungselement 68 in Form eines Sicherungsrings zur Fixierung des Stopfenelements 28 in der Öffnung 12 des Anschlussbauteils 14 vorgesehen ist. Wie in Zusammenschau mit den Fig. 19a, 19b erkennbar ist, welche eine Draufsicht auf und eine Schnittansicht durch das als Sicherungsring ausgebildete Fixierungselement gemäß Fig. 18 zeigen, weist dieser gemäß Fig. 19b einen im Wesentlichen kreisrunden Querschnitt auf. An diesen kreisrunden Querschnitt ist entsprechend der Radius der Aufnahmevertiefung 18 in Form einer im Querschnitt bogenförmigen Nut angepasst.

Diese Nut 18 verläuft analog zur Nur gemäß Fig. 11 innenumfangsseitig der Begrenzungswand 20 der Öffnung 12. Auch die Aufnahmenut 50 in dem Stopfenelement 28 ist im Querschnitt bogenförmigen ausgebildet. Damit der Sicherungsring 68 im Bereich der Aufnahmenut 50 auf das Stopfenelement 28 aufgesteckt werden kann, weist dieser analog zum Krallenelement einen Schlitz 76 auf. Insbesondere aus Fig. 18 ist somit ersichtlich, dass im vorliegenden Fall die Fixierung des Verbindungselements 10 innerhalb der Öffnung 12 des Anschlussbauteils 14 mittels des Sicherungsrings 68 erfolgt.

Zwischen der die Aufnahmenut 50 und der Durchgangsöffnung 40 ist - analog zur ersten Ausführungsform des Stopfenelements 28 - wiederum entweder ein kreisringförmiger, umlaufender Steg 62 beziehungsweise eine Mehrzahl von unterbrochenen, beispielsweise radial um die Mittellachse M angeordnete Teilstege 54 vorgesehen, welche wiederum eine Trennstelle 66 in Form einer Sollbruchstelle ausbilden, an denen das Stopfenelement 28 in den ersten Teil 58 und den zweiten Teil 60 unterteilt werden können.

Hierbei bildet der Steg 62 beziehungsweise die Teilstege 64 eine Trennstelle 66 in Form einer Sollbruchstelle aus, an welcher die beiden Teile 58, 60 des Stopfenelements 28 im Bedarfsfall getrennt werden können. Diese Trennung erfolgt wiederum durch gegenläufiges Verdrehen der beiden Teile 58, 60 des Stopfenelements 28 mittels der beiden Werkzeuge, dem Gabelschlüssel 36 und dem Innensechskantschlüssel 44. Hierdurch kann auch im vorliegenden Fall an der Sollbruchstelle 66, also dem wenigstens einen Steg 62 beziehungsweise den mehreren Teilstegen 64, eine Zerstörung herbeigeführt und somit die beiden Teile 58, 60 voneinander getrennt werden. Die Entnahme der einzelnen Teile 58, 60 sowie des Sicherungsrings 68 erfolgt dann in der im Zusammenhang mit dem ersten Ausführungsbeispiel bereits beschriebenen Weise.

Der Sicherungsring 68 kann - analog zum Krallenelement 68 - jeweilige schlitznahe Öffnungen als Werkzeugangriffe aufweisen, welche das Aufstecken des Sicherungsrings 68 auf das Stopfenelement 28 vereinfachen, ebenso wie die Entnahme nach dem Zerstören/Trennen des Stopfenelements 28 aus der Öffnung 12.

In Fig. 20 ist in einer ausschnittsweisen Schnittansicht die Befestigungsanordnung des Verbindungselements 10 in der Öffnung des Anschlussbauteils analog zu Fig. 18 dargestellt. Im Unterschied zur Ausführungsform gemäß Fig. 18 ist allerdings vorliegend der Sicherungsring 68 zur Fixierung des Stopfenelements 34 beziehungsweise des Verbindungelements 10 in der Öffnung 12 des Anschlussbauteils 14 außenseitig des Dichtrings 48 angeordnet ist. Wird somit das Verbindungselement 10 in die Öffnung 12 eingesteckt, so wird demzufolge zunächst der Dichtring 48 und erst anschließend der Sicherungsring 68 eingeschoben. Dies hat den Vorteil einer einfacheren Montage/Demontage des Verbindungselements 10 bei einer geringeren Einstecktiefe des Sicherungsrings 68.

Fig. 21 zeigt schließlich eine ausschnittsweise Schnittansicht der Befestigungsanordnung des Verbindungselements 10 in der Öffnung 12 des Anschlussbauteils 14 analog zu Fig. 11, wobei auch hier das Krallenelement 68 im Unterschied zur Ausführungsform gemäß Fig. 11 und analog zur Ausführungsform gemäß Fig. 20 außenseitig der Dichtung 48 angeordnet ist.

Fig. 22 zeigt eine ausschnittsweise Schnittansicht der Befestigungsanordnung des Verbindungselements 10 in der Öffnung 12 des Anschlussbauteils 14 analog zu Fig. 17, wobei der Kopf 30 des Stopfenelements 28 einen Anschluss 86 für eine medienführende Leitung beispielsweise in Form eines Schlauchs oder dergleichen umfasst. Der Anschluss 86 wird dabei im Wesentlichen gebildet durch den Aufnahmestutzen 88, der von der Klemmhülse 90 außenumfangsseitig umgeben ist, mittels welcher die medienführende Leitung am Aufnahmestutzen 88 gehalten ist. Darüber hinaus sind der innere und der äußere Dichtring 92, 94 als Teile des Anschlusses 86 vorgesehen. Anstelle des hier gezeigten Aufbaus kann die jeweilige, medienführende Leitung auch auf andere Weise an das Verbindungelement 10 angeschlossen sein. In Einsteckrichtung des Stopfenelements 28 in die Öffnung 12 ist die Aufnahmenut 46 vor der Aufnahmevertiefung 18, in welcher das Fixierungselement 68 aufgenommen ist, angeordnet. Hierbei ist die Aufnahmevertiefung 18 analog zur Aufnahmenut 46 ausgebildet, sodass das Fixierungselement 68 über Reibung gegen die Begrenzungswand 20 gehalten ist. Beim Einstecken des Stopfenelements 28 in die Öffnung können das Ende 78 beziehungsweise die Zinken 80 des Krallenelements 68 Rillen in die Begrenzungswand 20 einritzen. Die Anordnung der den Dichtring 48 aufnehmenden Aufnahmenut 46 dient einer Vermeidung einer Beschädigung des Dichtrings 48 beim Einstecken des Stopfenelements 28, da ein Kontakt zwischen den von dem Krallenelement 68 gegebenenfalls verursachten Rillen in der Begrenzungswand 20 mit dem Dichtring 48 vermieden wird.

Bei der beschriebenen Luftfederanlage kann das als Ventileinrichtung ausgebildete Bauelement 11 einfach auf das als Luftfeder ausgebildete Anschlussbauteil 15 aufgesteckt werden. Hierbei handelt es sich um eine besonders preiswerte Verbindungsmethode für das Bauelement 11 an dem Anschlussbauteil 14. Zum Aufbau der Luftfederanlage können wenigstens ein Bauelement 11 über die lösbare Rastverbindung 13 besonders einfach an dem Anschlussbauteil 14 befestigt werden. Weitere Komponenten wie Schläuche und Kabel und weitere Anschlussbauteile 14 und weitere Bauelemente 11 können besonders einfach über weitere lösbare Rastverbindungen 13 zu der Luftfederanlage miteinander gesteckt werden. Bei einer defekten Luftfeder kann an der Luftfederanlage lediglich die defekte Luftfeder ausgetauscht werden und bei einer defekten Ventilsensoreinheit als Bauelement 11 kann lediglich die defekte Ventilsensoreinheit von der Luftfederanlage entfernt und ausgetauscht werden.

### Bezugszeichenliste

- 10: Verbindungselement
- 11: Bauelement
- 12: Öffnung
- 13: Rastverbindung
- 14: Anschlussbauteil
- 15: Öffnung
- 16: Kanal
- 17: Gewinde
- 18: Aufnahmevertiefung
- 19: Rastfuß
- 20: Begrenzungswand
- 21: Öffnung
- 22: Werkzeug
- 23: Überstandselement
- 24: Kragen
- 25: Festlegung
- 26: Stützbereich
- 27: Klebstoff
- 28: Stopfenelement
- 29: Kerbe
- 30: Kopf
- 32: Schaft
- 34: Werkzeugangriff
- 36: Gabelschlüssel
- 38: Kragen
- 40: Durchgangsöffnung
- 42: Werkzeugangriff
- 44: Innensechskantschlüssel
- 46: Aufnahmenut
- 48: Dichtring
- 50: Aufnahmenut
- 52: Aufnahme
- 54: Bereich
- 56: Aufnahmebereich
- 58: Teile
- 60: Teile
- 62: Steg
- 64: Teilsteg
- 66: Trennstelle
- 68: Fixierungselement (Krallenelement, Sicherungsring)
- 70: Bereich
- 72: Kragenbereich
- 74: Öffnung
- 76: Schlitz
- 78: Ende
- 80: Zinken
- 82: Stützelement
- 84: Werkzeugangriff
- 86: Anschluss
- 88: Aufnahmestutzen
- 90: Klemmhülse
- 92: Dichtring
- 94: Dichtring

## Patentansprüche

1. Luftfederanlage für ein Kraftfahrzeug, mit wenigstens einem Bauelement (11), welches an einem Anschlussbauteil (14) mittels eines Verbindungselements (10) unter Ausbildung einer Steckverbindung fixiert ist,
**dadurch gekennzeichnet, dass**
die Steckverbindung eine lösbare Rastverbindung (13) ist.

2. Luftfederanlage nach Anspruch 1,
**dadurch gekennzeichnet, dass**
das Verbindungselement (10) einteilig mit dem Bauelement (11) ausgebildet ist.

3. Luftfederanlage nach Anspruch 1,
**dadurch gekennzeichnet, dass**
das Verbindungselement (10) separat von dem Bauelement (11) ausgebildet ist.

4. Luftfederanlage nach einem der vorhergehenden Ansprüche,
**dadurch gekennzeichnet, dass**
das Bauelement (11) als Leitung oder Ventil- und/oder Sensoreinheit ausgebildet ist.

5. Luftfederanlage nach einem der vorhergehenden Ansprüche,
**dadurch gekennzeichnet, dass**
die Rastverbindung (13) zerstörungsfrei lösbar ist.

6. Luftfederanlage nach einem der vorhergehenden Ansprüche,
**dadurch gekennzeichnet, dass**
das Verbindungselement (10) zum Befestigen in einer Öffnung (12, 74) des Anschlussbauteils (14) ausgebildet ist, und ein Stopfenelement (28) aufweist, welches in die Öffnung (12, 74) einsteckbar ist und welches eine Aufnahmenut (46, 50) aufweist, in welcher ein Fixierungselement (68) zur Fixierung des Stopfenelements (28) in der Öffnung (12, 74) angeordnet ist, wobei das Stopfenelement (28) im Bereich (54, 70) der Aufnahmenut (46, 50) für das Fixierungselement (68) eine Trennstelle (66) aufweist, an welcher ein erster und ein zweiter Teil (58, 60) des Stopfenelements (28) voneinander trennbar sind.

7. Luftfederanlage nach Anspruch 6,
**dadurch gekennzeichnet, dass**
die Trennstelle (66) als Sollbruchstelle zwischen den beiden Teilen (58, 60) des Stopfenelements (28) ausgebildet ist.

8. Luftfederanlage nach Anspruch 6 oder 7,
**dadurch gekennzeichnet, dass**
ein zweites der Teile (60) des Stopfenelements (28) eine Festlegung (25) aufweist, mittels welcher das zweite Teil (60) relativ zum Bauelement (11) und/oder dem Anschlussbauteil (14) kraftschlüssig und/oder formschlüssig radial festlegbar ist, und das erste Teil (58) einen Werkzeugangriff (34) aufweist, an welchem ein Werkzeug (36) zum Trennen der beiden Teile (58, 60) des Stopfenelements (28) ansetzbar ist.

9. Luftfederanlage nach Anspruch 8,
**dadurch gekennzeichnet, dass**
die Festlegung (25) einen Klebstoff (27) umfasst, mittels welchem der die Festlegung (25) aufweisende zweite Teil (60) mit dem Bauelement (11) und/oder dem Anschlussbauteil (14) verklebt ist.

10. Luftfederanlage nach Anspruch 8,
**dadurch gekennzeichnet, dass**
das zweite Teil (60) als die Festlegung (25) eine umfangsseitige Außenkontur aufweist, welche mit einer umfangsseitigen Innenkontur einer Ausnehmung des Bauelements (11) und/oder des Anschlussbauteils (14) korrespondiert.

11. Luftfederanlage nach Anspruch 6 oder 7,
**dadurch gekennzeichnet, dass**
an beiden Teilen (58, 60) des Stopfenelements (28) ein jeweiliger Werkzeugangriff (42, 84) vorgesehen ist, an welchen jeweilige Werkzeuge zum Trennen der beiden Teile (58, 60) des Stopfenelements (28) ansetzbar sind.

12. Luftfederanlage nach einem der Ansprüche 8 bis 11,
**dadurch gekennzeichnet, dass**
das Stopfenelement (28) einen aus der Öffnung (12, 74) heraus stehenden Kopf (30) aufweist, an welchem der Werkzeugangriff (42, 84) des ersten Teils (58) des Stopfenelements (28) vorgesehen ist.

13. Luftfederanlage nach Anspruch 11 oder 12,
**dadurch gekennzeichnet, dass**
das Stopfenelement (28) eine Durchgangsöffnung aufweist, an welcher der Werkzeugangriff (42, 84) des zweiten Teils (60) des Stopfenelements (28) vorgesehen ist.
